# EUROPÄISCHE PATENTSCHRIFT

(11) **EP 4 247 184 B1**
(45) Veröffentlichungstag und Bekanntmachung des Hinweises auf die Patenterteilung: **25.02.2026**
(21) Anmeldenummer: 21814762.7
(22) Anmeldetag: 16.11.2021
(51) Int. Cl.: A23L 27/10, A23L 2/52, A23L 27/00, A23L 29/30, C11B 1/10, A23L 2/56, C12C 5/02

(54) **VERFAHREN ZUR SELEKTIVEN ABTRENNUNG ZUMINDEST EINER ORGANISCHEN SUBSTANZ MIT MINDESTENS EINEM APOLAREN REST SOWIE VERWENDUNG DIESER SUBSTANZ IN EINEM LEBENSMITTEL-, GENUSSMITTEL-, KOSMETIK- ODER PHARMAPRODUKT**
METHOD FOR SELECTIVELY SEPARATING AT LEAST ONE ORGANIC SUBSTANCE COMPRISING AT LEAST ONE APOLAR GROUP, AND USE OF SAID SUBSTANCE IN A FOOD, LUXURY FOOD, COSMETIC, OR PHARMACEUTICAL PRODUCT
PROCÉDÉ DE SÉPARATION SÉLECTIVE D'AU MOINS UNE SUBSTANCE ORGANIQUE COMPRENANT AU MOINS UN GROUPE APOLAIRE, ET UTILISATION DE LADITE SUBSTANCE DANS UN ALIMENT, UN ALIMENT DE LUXE, UN PRODUIT COSMÉTIQUE OU UN PRODUIT PHARMACEUTIQUE

(30) Priorität: 17.11.2020 DE 102020130250; 15.12.2020 DE 102020133525; 04.05.2021 DE 102021002339
(43) Veröffentlichungstag der Anmeldung: 27.09.2023
(73) Patentinhaber: Döhler GmbH, 64295 Darmstadt (DE)
(72) Erfinder: BIAFORA, Agostino, 68623 Lampertheim (DE); BÜTTNER, Dominik, 63263 Neu-Isenburg (DE); KALTENBRUNNER, Axel, 65187 Wiesbaden (DE); MISSIKIEWITSCH, Dominik, 67134 Birkenheide (DE); STIELER, Jan, 60435 Frankfurt (DE)
(74) Vertreter: Tesch, Sabine
(86) Internationale Anmeldenummer: PCT/EP2021/081893
(87) Internationale Veröffentlichungsnummer: WO 2022/106430

(56) Entgegenhaltungen:
- EP-A1- 0 110 170
- DE-A1- 4 029 287
- DE-T2- 69 327 335
- CHARMILA C RATNASOORIYA ET AL: "Extraction of phenolic compounds from grapes and their pomace using -cyclodextrin", FOOD CHEMISTRY, ELSEVIER LTD, NL, vol. 134, no. 2, 2 February 2012 (2012-02-02), pages 625 - 631, XP028417743, ISSN: 0308-8146, [retrieved on 20120211], DOI: 10.1016/J.FOODCHEM.2012.02.014
- RAJHA HIBA N. ET AL: "[beta]-Cyclodextrin-Assisted Extraction of Polyphenols from Vine Shoot Cultivars", JOURNAL OF AGRICULTURAL AND FOOD CHEMISTRY, vol. 63, no. 13, 8 April 2015 (2015-04-08), US, pages 3387 - 3393, XP055889125, ISSN: 0021-8561, Retrieved from the Internet <URL:https://pubs.acs.org/doi/pdf/10.1021/acs.jafc.5b00672> DOI: 10.1021/acs.jafc.5b00672
- EL DARRA NADA ET AL: "Comparative Study between Ethanolic and [beta] -Cyclodextrin Assisted Extraction of Polyphenols from Peach Pomace", INTERNATIONAL JOURNAL OF FOOD SCIENCE, vol. 2018, 1 January 2018 (2018-01-01), pages 1 - 9, XP055889129, ISSN: 2356-7015, Retrieved from the Internet <URL:https://downloads.hindawi.com/journals/ijfs/2018/9491681.pdf> DOI: 10.1155/2018/9491681

## Beschreibung

Die Erfindung betrifft ein Verfahren zur Aromatisierung und/oder Stabilisieren eines Produktes, in dem eine Komposition zu dem zu aromatisierenden und/oder zu stabilisierenden Produkt zugesetzt wird, wobei die Komposition hergestellt wird mit einem Verfahren zur selektiven Abtrennung einer organischen Substanz mit mindestens einem apolaren Rest.

Das steigende Bewusstsein der Bevölkerung für einen gesunden Lebensstil fördert den Absatz von alkoholfreien Getränken, wie zum Beispiel Schaumweinen (Sekt), Limonaden oder Bieren. Dies erfordert die Suche nach neuen Herstellungstechniken, die es ermöglichen, Getränke bzw. Lebensmittel nicht nur mit einem genießbaren Geschmack und einem angenehmen Geruch, sondern auch komplett ohne Einsatz von Ethanol herzustellen.

Gemäß der europäischen Lebensmittel-Informationsverordnung (LMIV) beginnt die Kennzeichnungspflicht für Alkohol erst bei 1,2 vol.-%. Die Bezeichnung "alkoholfrei" bedeutet nicht zwangsläufig "ohne Alkohol". Zum Beispiel darf als "alkoholfrei" beworbenes Bier und Wein maximal 0,5 Vol.-% Alkohol enthalten. Sollte ein anderes Getränk (als Wein oder Bier) als "alkoholfrei" ausgelobt werden, darf es tatsächlich gar keinen Alkohol enthalten, der Alkoholgehalt liegt also bei 0,0 Vol.-%, ansonsten wird die Kennzeichnung "alkoholfrei" als irreführend und verbrauchertäuschend angesehen. Der Ausdruck "Alkohol" bezieht sich hier auf Ethanol.

Wichtige Komponenten von Lebensmitteln, aber auch von Genussmitteln, Kosmetik- und Pharmaprodukten werden durch Extraktionsverfahren mit Hilfe von Lösungsmitteln gewonnen, häufig unter Einsatz von Ethanol. Die so gewonnenen Komponenten können jedoch Ethanolrückstände enthalten, so dass Produkte umfassend solche Komponenten nicht "alkoholfrei" sind.

Als solche mittels Extraktion in Ethanol erhältliche Komponenten sind neben flüchtigen Aromastoffen in diesem Zusammenhang auch nicht-volatile Aromastoffe wie zum Beispiel Bitterstoffe, Öl-, Fett- und/oder Wachsfraktionen, Farbstoffe sowie Klebstoffe, aus pflanzlichen und/oder tierischen Ausgangsmaterialien sowie anderen natürlichen Quellen, beispielsweise aus Mikroorganismen oder Pilzen gewonnene Aromastoffe, und/oder synthetischen Ursprungs von Interesse.

Diese Stoffe weisen zumindest einen apolaren Rest im Molekül auf, können also entweder apolar oder amphiphil sein. Diese Stoffe werden im Folgenden auch kurz unter dem Begriff "apolare organische Substanz" zusammenfassend bezeichnet und zur besseren Lesbarkeit teilweise mit "AOS" abgekürzt.

Es besteht seit vielen Jahren ein großes Interesse an Technologien, die zur Rückgewinnung insbesondere von Aromastoffen aus Entalkoholisierungs- und/ oder Aufkonzentrierungsprozessen von Produkten wie Bier/ Wein etc. oder Säften beziehungsweise zur Entfernung unerwünschter Substanzen wie beispielsweise Bitterstoffen aus Zitrussäften, aber auch zur Rückgewinnung beziehungsweise Entfernung von apolaren organischen Substanzen aus Kosmetika und Pharmazeutika dienen, wobei die so gewonnenen Extrakte zu einer alkoholfreien Re-aromatisierung von Produkten oder auf andere Art, etwa als Überzugsmittel im Fall von Wachsen, verwendet werden können.

In der Literatur werden vier grundlegende Trennverfahren zur Gewinnung von gewünschten und zur Entfernung von unerwünschten apolaren organischen Substanzen, insbesondere von Aromastoffen, die in Flüssigkeiten wie Wasser oder Ethanol gelöst sind, beschrieben: 1) Flüssig/Flüssig-Extraktion mit organischen Lösungsmitteln, bei denen die Reinstoffe beziehungsweise die gewünschte Fraktion schließlich durch Abdampfen des verwendeten Lösungsmittels erhalten werden. 2) Rektifikation der AOSbeziehungsweise aromahaltigen Flüssigkeit. 3) Sorptionsverfahren bei denen unpolare Aromastoffe aus der flüssigen Phase an einer Festphase angereichert werden. 4) Fällung und Kristallisation von festen Aromabestandteilen. 5) direkte Extraktion mit überkritischen Gasen, Perkolation. Für Fett-, Öl- und Wachsfraktionen aus pflanzlichem oder tierischen Ausgangsmaterial sind auch Wasserdampfdestillation und mechanische Verfahren wie beispielsweise Pressen anwendbar.

Die Extraktion hat zwar eine weite Anwendungsbreite, allerdings ist die Verwendung von großen Mengen an organischen, oft chlorierten, Lösungsmitteln umwelttechnisch bzw. aus Gründen der Nachhaltigkeit höchst fraglich. Des Weiteren können thermisch labile Stoffe während des Abdampfens des Lösungsmittels irreversibel zerstört werden. Die Gewinnung beispielsweise von Aromastoffen aus einem ethanolischen Extrakt mittels Flüssig/Flüssig-Extraktion ist zudem schwierig, weil Ethanol selbst in einer Vielzahl von organischen Lösungsmittel löslich ist. Die direkte Re-aromatisierung mit einem ethanolischen Extrakt scheidet aus, da das Endprodukt nicht der Bezeichnung "ohne Alkohol" (Alkoholgehalt also bei 0,0 Vol.-%) gerecht wird.

Bei einer Rektifikation kann Ethanol oder Wasser nicht selektiv entfernt werden, da es üblicherweise Azeotrope mit den im Extrakt enthaltenen Aromastoffen bildet. Außerdem können thermisch labile aromagebende Komponenten irreversibel zerstört werden.

Bei Sorptionsverfahren werden die gewünschten angereicherten Stoffe mit unpolaren Medien wieder eluiert. Als Elutionsmittel kommt, vor allem in der Lebensmittelindustrie häufig Ethanol zur Anwendung, was den Extrakt für 0,0 Vol.-% Anwendungen unbrauchbar macht. Als weiteres Elutionsmittel kommt auch Kohlendioxid zum Einsatz. In EP 3063260 wird ein Verfahren zur Extraktion von zwei oder mehr Fraktionen aus Hopfenöl beschrieben, indem das auf einen adsorbierenden Träger geladene Hopfenöl zunächst mit flüssigem Kohlendioxid zwecks Abtrennung der ersten Fraktion und dann mit überkritischem Kohlendioxid zwecks Abtrennung der zweiten Fraktion behandelt wird. Die weiteren Fraktionen können bei der Kombination des überkritischen Kohlendioxids mit einem Co-Solvent abgetrennt werden. Die Elution mit flüssigem/ überkritischen Kohlendioxid umgeht zwar die zuvor genannte ungewünschte Verwendung von Alkoholen, allerdings kommt es beim Entlasten des Gases zu hohen Ausbeuteverlusten. Errichtung und Betrieb einer CO₂-Extraktionsanlage sind teuer und haben spezifische Sicherheitsanforderungen.

Maschinelle Verfahren wie Pressen kommen vor Allem in der Ölgewinnung zum Einsatz und benötigen kein Lösungsmittel.

Allerdings sind diese Verfahren nicht universell zur Gewinnung aller apolaren organischen Substanzen, insbesondere aller Öle und Wachse aus Pflanzen, einsetzbar.

Es besteht daher die Aufgabe, ein Verfahren zur Aromatisierung und/oder Stabilisierung eines Produktes basierend auf der selektiven Gewinnung zumindest einer apolaren organischen Substanz, insbesondere zumindest eines Aromastoffes, bevorzugt aus einer natürlichen Quelle, wie pflanzlichen oder tierischen Produkten, zu schaffen, das es ermöglicht, die gewonnenen Substanzen in Lebensmitteln, Genussmitteln, Kosmetikprodukten und/ oder Pharmaprodukten einzusetzen, die "ohne Alkohol" gekennzeichnet werden können. Insbesondere sollen derartige Produkte den Qualitätsanforderungen für die Bezeichnung "FTNS" ("From the named source") gerecht werden. Ziel ist es, sogenannte "clean label"-Produkte zu ermöglichen. Es ist eine weitere Aufgabe der Erfindung, die selektive Gewinnung von nicht-volatilen Aromastoffen wie beispielsweise von Bitterstoffen, sowie die die selektive Gewinnung von Öl-, Fett- und/oder Wachsfraktionen aus pflanzlichen und/oder tierischen Ausgangsmaterialien zu ermöglichen.

Aus dem Stand der Technik ist eine Reihe von Verfahren bekannt, in denen Cyclodextrine zur Entfernung unerwünschter Substanzen aus Lebensmittelsystemen verwendet werden. Cyclodextrine sind wasserlöslich, toxikologisch und umwelttechnisch unbedenklich. So werden Cyclodextrine z.B. zur Entfernung von Cholesterin aus Butter (AU 638531B2) oder aus Eiern (EP326469A, EP475451B1) verwendet. Solche Entfernungsprozesse bestehen normalerweise aus zwei Stufen: zuerst wird Cyclodextrin mit dem Lebensmittelsystem gemischt, wobei ein Komplex zwischen dem Cyclodextrin und der unerwünschten Substanz gebildet wird (Gast-Wirt-Komplex); und anschließend wird dieser Komplex aus dem Lebensmittelsystem entfernt. Das Cyclodextrin kann durch z.B. Behandlung mit heißem Wasser oder Alkohol (40 - 100 °C) aus dem Komplex wieder freigesetzt (Dekomplexierung) und dann in dem Entfernungsverfahren wiederverwendet werden.

Die deutschen Patentanmeldung DE 40 29 287 A1 nimmt Bezug auf das oben genannte Europäische Patent 3 26 469 und betrifft ein Verfahren zur Herstellung von cholesterinreduziertem Eigelb. Nach Abtrennung des mit Cholesterin bzw. Cholesterinestern beladenen β- Cyclodextrins vom verdünnten Eigelb wird das zugegebene Wasser wieder aus dem Eigelb entfernt und die danach im Eigelb vorhandenen Restmengen an β-Cyclodextrin mit Hilfe von α-Amylasen und/oder CTGasen enzymatisch abgebaut.

In der Publikation CHARMILA C RATNASOORIYA ET AL: "Extraction of phenolic compounds from grapes and their pomace using cyclodextrin", FOOD CHEMISTRY, ELSEVIER LTD, NL, Bd. 134, Nr. 2, 2. Februar 2012, Seiten 625-631 wird die Extraktion von Phenolkomponenten aus Trauben und ihrem Trester mit β-Cyclodextrin beschrieben und erklärt, dass Cyclodextrine die Fähigkeit haben, Wirt-Gast-Komplexe zum Einschluss eines breiten Bereichs von Komponenten zu bilden. Demnach wird β-Cyclodextrin in der Lebensmittelindustrie als "Encapsulating Agent" verwendet, um gewünschte Komponenten zu schützen oder störende Komponenten zu maskieren. Die Publikation RAJHA HIBA N. ET AL: "[beta]-Cyclodextrin-Assisted Extraction of Polyphenols from Vine Shoot Cultivars", JOURNAL OF AGRICULTURAL AND FOOD CHEMISTRY, Bd. 63, Nr. 13, 8. April 2015, Seiten 3387-3393 betrifft ebenfalls die von β-Cyclodextrin unterstützte Extraktion von Polyphenolen aus Weintrieben. In beiden Arbeiten wurden für die Analytik zum Bestimmen der Phenolkonzentration HPLC-Analysen mit Acetonitril durchgeführt.

Auf die oben genannten beiden Publikationen wird in der Arbeit EL DARRA NADA ET AL: "Comparative Study between Ethanolic and [beta] -Cyclodextrin Assisted Extraction of Polyphenols from Peach Pomace", INTERNATIONAL JOURNAL OF FOOD SCIENCE, Bd. 2018,1. Januar 2018, Seiten 1-9, Bezug genommen. Diese Publikation beschreibt eine vergleichende Studie zwischen ethanolischer und β-Cyclodextrin-unterstützter Extraktion von Polyphenolen aus Pfirsichtrester.

Die europäische Patentanmeldung EP 0 110 170 A1 betrifft ein Honigpulver, das seine natürlichen Aromastoffe für längere Zeit bewahren kann und ein Verfahren zu dessen Herstellung mit Hilfe von Cyclodextrinen. Demnach kann Honig mit einer heißgesättigten Lösung von Cyclodextrin in Wasser vermischt, die erhaltene homogene Lösung gefroren und lyophilisert werden, wobei anschließend eine Pulverisierung erfolgt. Das Honigpulver gibt die Aromastoffe erst beim Verzehr der daraus hergestellten Backware ab.

Das Dokument DE 693 27 335 T2 betrifft ein Verfahren zur Entfernung von Rest-Cyclodextrin. Beispielsweise wird β-Cyclodextrin zu Kaffee zugegeben und nach der Behandlung über eine Stunde bei 60°C die Lösung auf Raumtemperatur abgekühlt und ein Komplex aus Koffein und Cyclodextrin aus der Lösung ausgefiltert. Die koffeinfreie Kaffeelösung des Filtrats wird mit unterschiedlichen Enzymen behandelt. Gemäß diesem Dokument soll eine Möglichkeit geschaffen werden, vollständig alle Cyclodextrin-Reste aus einem Nahrungssystem zu entfernen.

Die Verwendung von Cyclodextrinen bei der bisher bekannten Gewinnung von Aromastoffen hat den Nachteil, dass das Lösungsmittel, das zur Dekomplexierung verwendet wird, in größeren Volumen und aufgewärmt eingesetzt sein muss, was zur Verdünnung der Aromakonzentration führt und auch einen zusätzlichen technischen Aufwand sowie hohen Kosten verursacht. Soll Ethanol als Lösungsmittel zur Dekomplexierung verwendet werden, wird neben Verdünnung der Aromakonzentration auch ein weiteres Problem entstehen, welches damit verbunden ist, dass dieser Ethanol nicht ohne Beeinträchtigung des Aromaprofils wieder entfernt werden kann.

Die Erfinder haben in überraschender Weise herausgefunden, dass Cyclodextrine in wässrigen und in alkoholischen Medien solche mittels Extraktion in Ethanol erhältliche Komponenten insbesondere für Lebensmittel wie beispielsweise Aromastoffe, Bitterstoffe, Öle, Fette und Wachse, Klebstoffe und Farbstoffe in ihrer Kavität reversibel aufnehmen können.

Derartige Komponenten weisen zumindest einen apolaren Rest auf, können also entweder apolar oder amphiphil sein. Eine amphiphile Komponente weist neben zumindest einem apolaren Teil auch zumindest einen polaren Teil auf. Organische Stoffe mit zumindest einem apolaren Rest - also auch, wenn sie ebenfalls einen polaren Teil aufweisen und insbesondere amphiphil sind - werden im Folgenden als "apolare organische Substanzen" bezeichnet. Dieser Begriff wird teilweise als "AOS" abgekürzt. Die mittels Extraktion in Ethanol erhältlichen organischen Stoffe mit zumindest einem apolaren Rest im Sinne der Erfindung sind in Wasser hydrophober als Ethanol.

Damit konnte durch die Erfindung eine Möglichkeit geschaffen werden, apolare organische Substanzen durch Wahl eines geeigneten Cyclodextrins selektiv aus einer Ausgangsmischung in einen Komplex aus Cylcodextrin und der apolaren organischen Substanz zu überführen.

Die Erfindung löst damit die oben genannten Aufgaben in sehr einfacher Weise bereits mit einem Verfahren nach Anspruch 1.

Die Erfindung stellt ein Verfahren zur Aromatisierung und/oder Stabilisieren eines Produktes, das ein Lebensmittel-, Genussmittel-, Kosmetik- oder Pharmaprodukt darstellt, in dem eine Komposition zu dem zu aromatisierenden und/oder zu stabilisierenden Produkt zugesetzt wird, wobei die Komposition hergestellt wird mit einem Verfahren zur selektiven Abtrennung zumindest einer organischen Substanz mit zumindest einem apolaren Rest (AOS) und/oder zumindest eines oder mehrerer Aromastoffe umfassend:
(a) Bereitstellen einer Ausgangsmischung, die mindestens eine organische Substanz mit zumindest einem apolaren Rest (AOS) und/oder zumindest einen Aromastoff oder mehrere Aromastoffe und optional zumindest ein Lösungsmittel enthält,
(b) In Kontakt bringen der Ausgangsmischung mit mindestens einem Cyclodextrin,
   wobei die organische Substanz mit mindestens einem apolaren Rest aus der Gruppe ausgewählt ist, welche volatile Aromastoffe, nicht-volatile Aromastoffe wie zum Beispiel Bitterstoffe, Öl-, Fett- und/oder Wachsfraktionen, Farbstoffe und Klebstoffe, insbesondere aus pflanzlichen und/oder tierischen Ausgangsmaterialien, sowie Mischungen aus zumindest zwei der genannten Substanzen umfasst,
   und wobei in Schritt a) und/oder in Schritt b) und/oder nach Schritt b) zumindest ein Lösungsmittel, insbesondere Wasser, zugegeben wird, und wobei der Kontakt des mindestens einen Cyclodextrins mit der zumindest einen organischen Substanz mit zumindest einem apolaren Rest der Ausgangsmischung zum Erhalt zumindest eines Cyclodextrin-AOS-Komplexes und/oder zumindest eines Cyclodextrin-Aromastoffe-Komplexes in einer flüssigen, insbesondere wässrigen, Phase führt, umfassend die weiteren Schritte
(c) Abtrennung des Cyclodextrin-AOS-Komplexes und/oder des Cyclodextrin-Aromastoff-Komplexes von der flüssigen Phase und
(d) Enzymatische Behandlung des abgetrennten Cyclodextrin-AOS-Komplexes und/oder des Cyclodextrin-Aromastoff-Komplexes, wobei eine mit mindestens einer organischen Substanz mit mindestens einem apolaren Rest (AOS) und/oder mit mindestens einem Aromastoff beladene Komposition erhalten wird,

wobei die enzymatische Behandlung mit mindestens einem Enzym erfolgt, welches aus der Gruppe ausgewählt ist, die Enzyme mit Amylaseaktivität, bevorzugt alpha-Amylase, besonders bevorzugt mit Fungal-alpha-Amylase,
Pulluanase und/oder Isoamylase,
sowie Mischungen aus zumindest zwei der genannten Enzyme umfasst.

Die Begriffe "das Cyclodextrin" oder "ein Cyclodextrin" beziehen sich auf die Gesamtheit der Moleküle an Cyclodextrin im jeweils betrachteten Stoffsystem, etwa in der Ausgangsmischung oder der flüssigen Phase. Dies gilt entsprechend für den Ausdruck "der Cyclodextrin-AOS-Komplex" oder "ein Cyclodextrin-AOS-Komplex".

Durch das Verfahren zur selektiven Abtrennung zumindest einer organischen Substanz mit zumindest einem apolaren Rest (AOS) und/oder zumindest eines oder mehrerer Aromastoffe wird eine mit mindestens einer organischen Substanz mit zumindest einem apolaren Rest wie beispielsweise einem Aroma- oder Bitterstoff beladene Komposition erhalten. Damit wird ein reversibler Schutz beispielsweise thermisch labiler Stoffe ermöglicht, der entfernt werden kann, sobald er nicht mehr benötigt wird.

Je nachdem, in welchem Stoffsystem die zumindest eine apolare organische Substanz in der Ausgangsmischung vorliegt, ist kein Zusatz von Lösungsmitteln beziehungsweise weiteren Lösungsmitteln notwendig, um das erfindungsgemäße Verfahren durchführen zu können. Die Ausgangsmischung kann beispielsweise bereits selbst eine Lösung sein, oder nach Zugabe von in Wasser gelösten Cyclodextrinen in Schritt b) dann durch dieses Wasser genügend Lösungsmittel enthalten.

Die Güte der Komplexbildung kann durch Einstellung des Lösungsmittel-, insbesondere des Wassergehaltes und/oder des Ethanolgehalts, der Ausgangsmischung beeinflusst werden. Daher bietet die Erfindung die Möglichkeit, durch in Schritt a) und/oder in Schritt b) und/oder nach Schritt b) je nach Anwendungsfall zumindest ein Lösungsmittel zuzudosieren. Dabei wird der Fachmann den Gehalt an Lösungsmittel so einstellen, dass die Güte der Komplexbildung für den Anwendungsfall optimiert wird. Auch die Wahl des Cyclodextrins, der Temperatur und/oder des Energieeintrags während der Komplexierung, beispielsweise durch Einstellung der Rührergeschwindigkeit, bieten Möglichkeiten, die Güte der Komplexbildung zu beeinflussen.

Die Bedingungen für die Komplexbildung können im Rahmen der Erfindung dabei auf die abzutrennenden apolaren organischen Substanzen abgestimmt werden. Insbesondere können im Rahmen der Erfindung die Extraktionsbedingungen derart angepasst werden, dass beispielsweise Bitterstoffe selektiv komplexiert und isoliert werden oder aber unberührt bleiben können.

In einer vorteilhaften Weiterbildung der Erfindung ist dazu vorgesehen, dass in Schritt a) und/oder in Schritt b) und/oder nach Schritt b), insbesondere durch Zugabe von Wasser, ein Wasseranteil im Bereich von 15 Vol.-% bis 35 Vol.-%, bevorzugt von 20 Vol.-% bis 30 Vol.-%, und/oder, insbesondere durch Zugabe von Ethanol, ein Ethanolanteil von mindestens 40 Vol.-%, bevorzugt ein Ethanolanteil im Bereich von 40 Vol.-% bis 60 Vol.-%, eingestellt wird.

Ethanolhaltige Extrakte von apolaren organischen Substanzen, insbesondere von Aromaastoffen und/oder Bitterstoffen, sind hervorragend für den Einsatz in Aromen für die Zugabe in Lebensmittel, Genussmittel, Kosmetika oder Pharmaprodukte geeignet, da diese ein natürliches, komplexes, dem Ausgangsstoff sehr ähnliches Aromaprofil besitzen. Die Erfindung ermöglicht durch das Einstellen des Wasser- und/oder Ethanolgehalts bei der Komplexierung der apolaren organischen Substanz mittels Cyclodextrin den Erhalt dieser Komplexität nach der Entalkoholisierung für ein alkoholfreies Produkt.

Es hat sich im Laufe von Prozessoptimierungen gezeigt, dass durch eine Verdünnung mit Wasser auf 15 Vol.-% bis 35 Vol.-%, bevorzugt im Bereich von 20 Vol.-% bis 30 Vol.-%, die Komplexierungsgüte der Cyclodextrine für volatile Aromabestandteile stark erhöht wird. Die Zugabe von Wasser kann je nach Stoffsystem allerdings überraschenderweise zur Folge haben, dass nicht-volatile Aromabestandteile, wie zum Beispiel Bitterstoffe, nicht mehr komplexiert werden. Das natürliche Aromaprofil des Extraktes wird somit verändert. Im Rahmen der Erfindung wurde überraschenderweise herausgefunden, dass dennoch eine Komplexierung von Bitterstoffen bei einem Ethanolgehalt der flüssigen Phase bei der Komplexbildung mit Cyclodextrin von mindestens 40 Vol.-% erreicht werden kann.

Damit ermöglicht die Erfindung den Erhalt des charakteristischen Aromaprofils aus einem ethanolischen Extrakt, welches neben volatilen auch nicht-volatile Aromastoffe wie beispielsweise Bitterstoffe enthält. Die Erfindung bietet damit außerdem die Möglichkeit, nicht-volatile Aromastoffe wie beispielsweise Bitterstoffe durch für deren Komplexierung ungünstige Bedingungen, insbesondere eines Ethanolgehaltes unter 40 Vol.-%, selektiv aus einem Extrakt enthaltend apolare organische Substanzen zu entfernen.

Obwohl die Verwendung von Cyclodextrinen (CD) in Lebensmittelsystemen bekannt ist, wurden sie nach Kenntnis der Erfinder bis jetzt nie zu einer selektiven Gewinnung von Aromastoffen oder anderen organischen Substanzen mit zumindest einem apolaren Rest verwendet. Die Erfindung schafft damit ein Verfahren, in dem Cyclodextrine zur Gewinnung von alkoholfreien (das heißt ethanolfreien) deklarationsfreien FTNS (FTNS = "from the named source", "von der genannten Frucht bzw. Quelle") Aroma- oder Bitterstoffen aus wässrigen aber auch (und vor allem) aus ethanolischen Extrakten verwendet werden.

Die Erfindung schafft somit ein Verfahren, das es ermöglicht, organische Substanzen mit zumindest einem apolaren Rest und/oder zumindest einen Aromastoff oder mehrere Aromastoffe mit Hilfe von Cyclodextrinen aus einem wässrigen oder ethanolischen oder anderen Extrakt in einer konzentrierten Form abzutrennen/ zu gewinnen, wobei der technische Aufwand (bzw. Verbrauch an Lösungsmittel) reduziert wird und das ganze Verfahren bei milden Temperaturen realisierbar ist. Diese gewonnenen apolaren organischen Substanzen wie beispielsweise Aromastoffe sind zum Einsatz in Lebensmitteln, Genussmitteln, Kosmetikprodukten und/ oder Pharmaprodukten geeignet, die "ohne Alkohol" gekennzeichnet werden können.

Mit der Erfindung wurde ein Prozess gefunden, der es auch ermöglicht, Öl-, Fett- und/oder Wachsfraktionen, insbesondere aus pflanzlichen und/oder tierischen Ausgangsmaterialien, selektiv zu gewinnen. Dafür hat sich Cyclodextrin in überraschend einfacher Weise als geeigneter Hilfsstoff erwiesen, der sowohl wasserlöslich ist als auch die Zielsubstanzen an sich binden kann. Die Zielsubstanz kann dabei ohne weitere Verwendung von Lösungsmitteln aus dem Cyclodextrin-AOS-Komplex wieder entfernt werden.

Mit der Erfindung können alle organischen Substanzen mit zumindest einem apolaren Rest durch Extraktion aus der Ausgangsmischung mittels Cyclodextrinen gewonnen werden, welche so hydrophob sind, dass sie als Gast mit alpha- und/oder beta- und/oder gamma- und/oder delta-Cyclodextrin als Wirt einen Komplex bilden. Mit anderen Worten ist die betreffende organische Substanz mit zumindest einem apolaren Rest derart hydrophob, dass sie aus einer Lösung in die Kavität von alpha- und/oder beta- und/oder gamma- und/oder delta-Cyclodextrin übergeht. Im Rahmen der Erfindung muss dabei nicht immer die ganze apolare Substanz in die Kavität des Cyclodextrins komplexiert werden. Beispielsweise wird bei Fetten und organischen Säuren im Wesentlichen nur der hydrophobe Teil der Substanz in die Kavität des Cyclodextrins komplexiert. Der polare Teil der Substanz ragt gemäß einer Modellvorstellung aus der Kavität hervor. Auch bei amphiphilen Substanzen wird der hydrophobe Teil in die Kavität aufgenommen und der hydrophile Teil bleibt sozusagen unberührt.

Das erfindungsgemäße Verfahren setzt die apolaren organischen Substanzen keiner hohen thermischen Belastung aus. Im Rahmen der Erfindung ist dazu vorgesehen, das Verfahren bei Höchsttemperaturen im Bereich von mindestens 40°C bis maximal 70°C, bevorzugt bei einer Temperatur von mindestens 40°C bis maximal 55°C durchzuführen. Diese Temperaturen beziehen sich insbesondere auf Schritt d), welcher unten erläutert wird. In Schritt b) liegen die Temperaturen vorzugsweise niedriger, insbesondere im Bereich von 4°C bis 10°C, bevorzugt bei 6°C.

Die Erfindung bietet dabei den Vorteil, dass sie für unterschiedliche Anwendungsgebiete eingesetzt werden kann, da die zumindest eine organische Substanz mit zumindest einem apolaren Rest aus der Gruppe ausgewählt werden kann, welche Sekundärmetabolite,
Phytochemikalien, insbesondere sekundäre Pflanzenstoffe, volatile Aromastoffe,
nicht-volatile Aromastoffe wie zum Beispiel Bitterstoffe, Farbstoffe,
Öl-, Fett- und/oder Wachsfraktionen,
Klebstoffe,
insbesondere natürlichen Ursprungs, bevorzugt aus pflanzlichen und/oder tierischen Ausgangsmaterialien,
sowie Mischungen aus zumindest zwei der genannten Substanzen umfasst. Besonders interessant sind dabei natürliche Aromastoffe, auch solche gewonnen aus Mikroorganismen oder Pilzen. Phenolische Substanzen können zur Stabilisierung von Farbstoffen von Bedeutung sein.

Im Rahmen der Erfindung umfasst das Verfahren den weiteren Schritt:
(c) Abtrennung des Cyclodextrin-AOS-Komplexes und/oder des Cyclodextrin-Aromastoff-Komplexes von der flüssigen Phase, insbesondere vom Lösungsmittel.

Dadurch kann die (noch komplexierte) apolare organische Substanz, insbesondere der Aromastoff, aufkonzentriert werden. Die Abtrennung des Cyclodextrin-AOS-Komplexes und/oder des Cyclodextrin-Aromastoff-Komplexes von der flüssigen Phase führt zum Erhalt einer abgetrennten festen Phase, welche zumindest den Cyclodextrin-AOS-Komplex und/oder des Cyclodextrin-Aromastoff-Komplexes enthält. Die flüssige Phase enthält Wasser und Lösungsmittel, insbesondere Ethanol, mit denen die apolare organische Substanz wie beispielsweise zumindest ein Aromastoff in der Ausgangsmischung bereitgestellt und/oder im erfindungsgemäßen Verfahren versetzt wurde.

Es verbleibt nach Schritt c) eine im Wesentlichen lösungsmittelfreie feste Phase. "Im Wesentlichen lösungsmittelfrei" bedeutet insbesondere, dass Lösungsmittel wie Wasser und/oder Ethanol beispielsweise an der festen Phase adsorbiert, jedoch nicht mehr frei in der festen Phase vorliegen. Durch Abtrennung von Wasser in Schritt c) können je nach Anwendungsfall auch unerwünschte Bestandteile aus der Ausgangsmischung vom Filterkuchen abgetrennt werden, vergleichbar der Funktion eines Waschschritts.

Die Abtrennung beispielsweise von Wasser, jedoch auch von anderen Flüssigkeiten, aus der festen Phase, insbesondere aus dem Filterkuchen, kann im Rahmen der Erfindung durch eine Trocknung unterstützt werden. In einer einfachen Ausführungsform kann die abgetrennte feste Phase beispielsweise als Filterkuchen mit Druckluft, insbesondere bei einem Druck von 2 bar, in Richtung auf die Filterschicht durchströmt werden. Statt Druckluft kann auch ein inertes Gas verwendet werden.

Bekannte Verfahren zur Entfernung von Alkohol mittels Verdampfer oder Umkehrosmose führen dazu, dass zum Einen mit Ethanol auch andere wichtige, insbesondere volatile, Aromastoffe entfernt werden, die für den charakteristischen Geschmack des Extraktes entscheiden sind. Zum Anderen können thermisch labile Substanzen zerstört werden, oder es können unerwünschte Geschmacksveränderungen verursacht werden. Das in der Erfindung beschriebene Verfahren erlaubt das Entfernen des Ethanols aus dem Extrakt mit hoher Selektivität. Dabei bleibt die Komplexität des Extraktes erhalten indem sowohl volatile als auch nicht-volatile Aromabestandteile gleichermaßen komplexiert werden.

Im Rahmen der Erfindung umfasst das Verfahren den weiteren Schritt
(d) Enzymatische Behandlung des abgetrennten, Cyclodextrin-AOS-Komplexes und/oder des Cyclodextrin-Aromastoff-Komplexes, wobei eine mit mindestens einer organischen Substanz mit zumindest einem apolaren Rest (AOS), insbesondere mit mindestens einem Aromastoff beladene Komposition erhalten wird.

Es hat sich überraschenderweise gezeigt, dass durch die enzymatische Behandlung nicht nur freie Cyclodextrine, sondern auch Cyclodextrine, die mit mindestens einer apolaren organischen Substanz wie einem Aromastoff in einem Komplex gebundenen sind, zersetzt werden und dabei die apolare organische Substanz, im Beispiel der Aromastoff (ohne Beeinträchtigung) in der erhaltenen Komposition angereichert wird.

Zusätzlich zu einer Behandlung mit den unten näher beschriebenen Enzymen kann dieser Abbau des Cyclodextrins und damit die Freisetzung der apolaren organischen Substanz aus dem Komplex im Rahmen der Erfindung auch durch den Einsatz von Organismen aus der Gruppe, welche solche Hefen, Pilze und Mischungen derselben umfasst, die in der Lage sind, Cyclodextrin abzubauen.

Die Behandlung des Cyclodextrin-AOS-Komplexes und/oder des Cyclodextrin-Aromastoff-Komplexes zur Gewinnung der apolaren organischen Substanz kann unterstützt werden mit einem weiteren Schritt
d1) Verdünnen des in Schritt c) abgetrennten Cyclodextrin-AOS-Komplexes und/oder des Cyclodextrin-Aromastoff-Komplexes mit Wasser vor der insbesondere enzymatischen Behandlung in Schritt d).

Durch den oben beschrieben vorgeschalteten Schritt c) zur Abtrennung von Wasser ist dann in Schritt d1) hinzugegebenes Wasser für die Enzymierung frei von unerwünschten Bestandteilen.

In einer vorteilhaften Weiterbildung der Erfindung kann für die Enzymierung auch der pH-Wert in Abstimmung auf die verwendeten Enzyme eingestellt werden, beispielsweise auf einen Wert im sauren Bereich, insbesondere auf pH 4,5. Über die Einstellung des pH-Wertes kann im Rahmen der Erfindung die Aktivität des Enzyms beeinflusst werden. Dieser Effekt kann genutzt werden, um bei Verwendung unterschiedlicher Cyclodextrine durch Einstellung des pH-Wertes zunächst einen Typ Cyclodextrin und bei Veränderung des pH-Wertes ein anderes Cyclodextrin mit demselben Enzym abzubauen.

Im Folgenden werden Vorteile des erfindungsgemäßen Verfahrens am Beispiel von Aromastoffen als apolare organische Substanz beschrieben. Diese gelten auch für die anderen oben genannten apolaren organischen Substanzen: Das erfindungsgemäße Verfahren ermöglicht es, aus einer verdünnten Ausgangsmischung die Komposition zu erhalten, in der Aromastoffe in einer konzentrierten Form vorliegen. Die Abtrennung kann dabei schonend und vollständig verlaufen. Außerdem ist es dank diesem Verfahren möglich, aus Ausgangsmischungen selbst mit einem sehr hohen Alkoholgehalt (nämlich von bis zu 80 Vol.-%) aromabeladene Kompositionen zu erhalten, die in Lebensmitteln, Genussmitteln, Kosmetikprodukten und/ oder Pharmaprodukten einsetzbar sind, die "ohne Alkohol" gekennzeichnet werden können.

Dadurch dass das erfindungsgemäße Verfahren bei einer Temperatur durchgeführt werden kann, die nicht höher als 55 °C oder sogar nicht höher als Raumtemperatur ist, können Aromastoffe gewonnen werden, die leicht- und mittelflüchtig (d.h. mit Verdunstungszahl < 10 bzw. von 35 bis 10) sind und/ oder thermisch labil sind. Ein weiterer Vorteil des erfindungsgemäßen Verfahrens ist, dass mit unterschiedlichen Amylasen die verwendeten α-, β- und γ-Cyclodextrine teilweise selektiv hydrolysiert werden können, was eine kaskadierende Freisetzung von Aromastoffen erlaubt. Auf diese Punkte wird weiter unten noch weiter eingegangen.

In einer Weiterbildung der Erfindung ist vorgesehen, Schritt d) derart durchzuführen, dass die Cyclodextrin-Konzentration in der mit mindestens einer apolaren organischen Substanz (AOS), insbesondere mit mindestens einem Aromastoff, beladenen Komposition kleiner ist als 0,5 Gew.-%, bevorzugt kleiner als 0,1 Gew.-%. Ein derart geringer Gehalt an Cyclodextrin hat auf die Verwendung der gewonnenen apolaren organischen Substanz (AOS) keinen Einfluss.

Die Cyclodextrinkonzentration kann dabei in Bezug auf die Gesamtmasse derjenigen Komposition eingestellt werden, welche bei der gewählten Ausführungsform des erfindungsgemäßen Verfahrens das Endprodukt darstellt. Diese Komposition kann beispielsweise nach der Durchführung der Schritte a), b), c) und d) aus einer wässrigen Aromastofflösung eine Zusammensetzung aus Wasser, Aromastoff, Abbauprodukten des Cyclodextrins und Enzym sowie Resten von Cyclodextrin mit einem Anteil unter 0,1 Gew.-% sein. Werden in weiteren Verfahrensschritten Komponenten entfernt, wie etwa Wasser und Enzyme, kann die enzymatische Behandlung derart durchgeführt werden, dass die Cyclodextrinkonzentration weiter vermindert wird und daher im wasser- und enzymfreien Produkt bei unter 0,1 Gew.-% liegt.

Die Einstellung der Cyclodextrinkonzentration kann durch Abtrennen unerwünschter Bestandteile für das Endprodukt, zu denen nicht abgebaute Cyclodextrin-AOS-Komplexe gehören können, unterstützt werden. Gemäß einer weiteren vorteilhaften Ausführungsform der Erfindung umfasst das Verfahren dazu einen weiteren Schritt
(e) Filtrieren des aus der insbesondere enzymatischen Behandlung des Cyclodextrin-AOS-Komplexes resultierten Gemisches, wobei eine mit mindestens einer organischen Substanz mit zumindest einem apolaren Rest (AOS) beladene Komposition erhalten wird.

### Schritt (a)

Unter "Aromastoff" wird in der vorliegenden Erfindung eine insbesondere bei Raumtemperatur volatile, organische Substanz bezeichnet, die Geruchs- und Geschmackswahrnehmungen hervorruft oder modifiziert. Häufig handelt es sich bei Aromastoffen um Alkohole, Säuren, Ester, Laktone, Aldehyde, Ketone, Acetale, Ketale, Ether, Epoxide sowie deren analoge Schwefelverbindungen. Sauerstoff-, Stickstoff- und Schwefel-Heterocyclen, Heteroaromaten (z.B. Alkylpyrazine), Amine und Amide. Einfache oder komplexe, gesättigte und ungesättigte, aliphatische und cycloaliphatische Verbindungen, Aromaten und Terpene, usw.. Die wichtigsten Arten von Aromastoffen sind natürliche, naturidentische und künstliche. Bevorzugt werden im Rahmen der vorliegenden Erfindung, die sogenannten natürlichen Aromastoffe, bei denen das Ausgangsmaterial pflanzlicher oder tierischer Herkunft ist. Das Ausgangsmaterial tierischer Herkunft ist zum Beispiel Honig, Milch, Fleisch, Knochen und Körperflüssigkeiten. Bei dem Ausgangsmaterial pflanzlicher Herkunft handelt es sich um Pflanzen oder Pflanzenteile, wie beispielsweise Blüten, Knospen, Blätter, Stängel, Halme, Rinden, Wurzeln, Knollen, Zwiebeln, Rhizome, Früchte, Nüsse, Beeren, und Samen, Obst und Gemüse. Diese Ausgangsmaterialen können beispielsweise in frischer, gegarter, gekeimter, getrockneter, fermentierter Form oder in einer zum Verzehr als Lebens- oder Genussmittel zubereiteten Form (z. B. wie Bier, Wein, Schaumwein, Spirituosen wie Whiskey usw.) vorliegen. Diese Ausgangsmaterialen können entweder direkt als Ausgangsmischung im erfindungsgemäßen Verfahren eingesetzt werden oder diese Ausgangsmaterialen können vor dem Einsatz als Ausgangsmischung in mindestens einem dem Fachmann bekannten Verfahren aufgearbeitet werden. Diese Verfahren umfassen z. B. Auflösen, Dispergieren, Aufreinigung, Maischen, Einweichen, Fermentation- und/ oder Trennverfahren, wie Extraktion, Filtration, usw.. Beispiele für Pflanzen, welche ethanolische Extrakte mit Bitterstoffen liefern, sind Enzian, Chiretta und Wermut.

Die Ausgangsmischung kann neben solchen "Aromastoffen" auch weitere Bestandteile des Ausgangsmaterials pflanzlicher oder tierischer Herkunft enthalten. Insbesondere kann die Ausgangsmischung eine oder mehrere apolare organische Substanzen enthalten, wozu auch nicht-volatile Aromastoffe wie zum Beispiel Bitterstoffe, Öl-, Fett- und/oder Wachsfraktionen, insbesondere aus pflanzlichen und/oder tierischen Ausgangsmaterialien, sowie Mischungen aus zumindest zwei der genannten Substanzen gehören.

Die Ausgangsmischung kann im Rahmen der Erfindung in Form einer festen oder flüssigen Dispersion, insbesondere in Form eines Pulvers oder einer Lösung und/oder einer Suspension und/oder einer Emulsion vorliegen. Grundsätzlich kann die Ausgangsmischung jedes Lösungsmittel enthalten, in dem sich die abzutrennenden apolaren organischen Substanzen lösen, und welches leicht in der Kavität aufgenommen beziehungsweise aus der Kavität des Cyclodextrin-Moleküls mit mindestens einer abzutrennenden Substanz verdrängt werden kann. In Schritt a) und/oder in Schritt b) und/oder nach Schritt b) können im Rahmen der Erfindung Wasser, C₁-C₄-Alkohole, Diethylether, Aceton usw. oder deren Mischungen z.B. als Lösungsmittel verwendet werden. Bevorzugt wird ein Lösungsmittel verwendet, das aus der Gruppe ausgewählt ist, die Wasser, Ethanol oder deren Mischungen umfasst. Ein Lösungsmittel kann in Schritt a) auch im Rahmen der Bereitstellung der Ausgangsmischung zugegeben werden. Beispielsweise können ethanol- und/oder wasserhaltige Ausgangsmischungen je nachdem, welche Substanzen abgetrennt werden sollen, auch direkt mittels des erfindungsgemäßen Einsatzes von Cyclodextrin extrahiert werden.

Mindestens eines der oben genannten Lösungsmittel kann in einer Ausführungsform der Erfindung zusätzlich zu einer Zugabe in Schritt (a) im Schritt (b) zugegeben werden.

Der bevorzugte Gehalt an Lösungsmittel liegt niedriger als 100 Gew.-%. Der Fachmann wird den Gehalt an Lösungsmittel sowie das Mischverhältnis von zwei oder mehreren Lösungsmitteln in Abstimmung auf die Löslichkeit der/s abzutrennenden Aromastoffe/s, Effektivität der Komplexbildung und unter Berücksichtigung der Prozesswirtschaftlichkeit wählen. Besonders bevorzugt wird eine Ausgangsmischung, in der die zumindest eine apolare organische Substanz, insbesondere der(die) Aromastoff(e), in einer minimalen Mengen an Lösungsmittel gelöst sind.

Je höher der Gehalt an Lösungsmittel ist, desto höher ist die Löslichkeit eines abzutrennenden Aromastoffes und eines verwendeten Cyclodextrins, was die Geschwindigkeit der Komplexbildung erhöht. Jedoch sollte man zu sehr verdünnte Lösungen vermeiden, da das Verfahren unwirtschaftlich und auch die Wahrscheinlichkeit eines Kontaktes und Wechselwirkung von Aromastoffmolekülen mit Cyclodextrin zu niedrig wird. Nach einer Modellvorstellung sind diese Zusammenhänge darin begründet, dass bei höheren Konzentrationen an apolarer organischer Substanz Komplexe dieser Substanz mit Cyclodextrin aufgrund des treibenden Gradienten bevorzugt gebildet werden. Ist die Verdünnung zu groß, ist die Triebkraft für die Komplexbildung nicht mehr ausreichend.

Bevorzugt wird ein Ausgangsmaterial in einer zum Verzehr als Lebens- oder Genussmittel zubereiteten Form (z. B. wie Bier, Wein, Schaumwein, Spirituosen usw.), das einer Extraktion, bevorzugt einer Festphasenextraktion (engl. *solid phase extraction,* kurz "SPE", ältere Bezeichnung auch 'Sorbensextraktion') unterworfen wird, wobei der erhaltene, lösungsmittelhaltige Festphasenextrakt als Ausgangsmischung verwendet wird. Besonders bevorzugt ist ein ethanolhaltiger Festphasenextrakt, in dem der Gehalt an Ethanol bis zu 80 Vol.-% bezogen auf das Gesamtvolumen des Festphasenextraktes betragen kann. Der Gehalt an Aromastoff(en) beträgt mindestens ca. 0,1 Gew.-%, bevorzugt von 0,5 bis 8 Gew.-%, bezogen auf das Gesamtgewicht des Festphasenextraktes.

Die Samen jeder Art, insbesondere Getreide, sowie die aus den Getreiden erhaltenen Produkte, wie Malz, Bierwürze, Maische, Bier oder Ähnliches, stellen ein weiteres bevorzugtes Ausgangsmaterial dar. Die Getreide können z.B. aus der Gruppe ausgewählt werden, die Gerste, Weizen, Roggen, Dinkel, Mais, Hafer, Reis, Hirse, Triticale und deren Mischungen umfasst. Dieses Ausgangsmaterial kann entweder direkt als Ausgangsmischung im erfindungsgemäßen Verfahren eingesetzt werden oder in mindestens einem dem Fachmann bekannten Verfahren aufgearbeitet werden (s.o.). Besonders bevorzugt wird als Ausgangsmaterial Bierwürze und/ oder Maische, das einer Fermentation unterworfen wird, wobei das erhaltene Fermentat als Ausgangsmischung verwendet wird. Der Gehalt an Aromastoff(en) beträgt mindestens ca. 0,01 Gew.-%, bevorzugt von 0,1 bis 8 Gew.-%, bezogen auf das Gesamtgewicht des Fermentats.

### Schritt (b)

Im Schritt (b) des erfindungsgemäßen Verfahrens werden die Cyclodextrin-AOS-Komplexe hergestellt, in dem mindestens ein Cyclodextrin mit der Ausgangsmischung in Kontakt gebracht wird. Die Komponenten können entweder in einem pulverförmigen Zustand oder in einer Suspension und/oder in einer Emulsion und/oder in einer Lösung vermischt werden.

Es sind verschiedene Verfahren zur Herstellung von Gast-Wirt-Komplexen bekannt, wobei am häufigsten die Herstellung in Lösungsmittel (Kopräzipitation und Komplexierung in einer Suspension "slurry method") oder Knetmethode angewendet wird (siehe z.B. S.K. et al.// Research Journal of Pharmaceutical, Biological and Chemical Sciences., 2013, Bd. 4, Nr. 2, S. 1694-1720).

In der Erfindung wird Kopräzipitation oder Komplexierung in einer Suspension ("slurry method") verwendet, in der mindestens ein Cyclodextrin zu einer wässrigen oder ethanolhaltigen Lösung bzw. Suspension der Ausgangsmischung gegeben wird und ausfallende Komplexe abgetrennt werden.

Als "Cyclodextrin" kann ein substituiertes oder unsubstituiertes α- Cyclodextrin, zumindest ein substituiertes oder unsubstituiertes β- Cyclodextrin, zumindest ein substituiertes oder unsubstituiertes γ- Cyclodextrin oder zumindest ein substituiertes oder unsubstituiertes δ-Cyclodextrin oder deren Mischungen verwendet werden, bevorzugt substituiertes oder unsubstituiertes γ-Cyclodextrin. Da bei der Verwendung von substituierten Cyclodextrinen als Abbauprodukte des optionalen Verfahrenschrittes d) der enzymatischen Behandlung Stoffe entstehen können, die in Lebensmitteln unerwünscht sein und in einem weiteren Trennschritt entfernt werden können, ist die Verwendung von unsubstituierten Cyclodextrinen in solchen Fällen bevorzugt.

Nach einer Modellvorstellung besteht bei gamma-Cyclodextrin im Vergleich mit den übrigen genannten Cyclodextrinen zum Einen eine gute Balance zwischen Löslichkeit in Wasser und/oder Ethanol auf der eine Seite und seiner Kavitätsgröße auf der anderen Seite. Zudem konnte ein besonders guter enzymatischer Abbau beobachtet werden, was in der Modellvorstellung damit begründet wird, dass aufgrund seiner Größe eine gewisse Flexibilität des gamma-Cyclodextrin-Gerüsts besteht. Nach dem Schlüssel-Schloss-Prinzip kann sich dieses Molekül somit besonders gut in die aktive Tasche des Enzyms einlagern.

Besonders bevorzugt ist eine Mischung von 10 Gew.-% substituiertes oder unsubstituiertes β-Cyclodextrin und 90 Gew.-% substituiertes oder unsubstituiertes γ-Cyclodextrin, insbesondere im Hinblick auf die Abtrennung des Cyclodextrin-AOS-Komplexes von der aus der Ausgangsmischung resultierenden flüssigen Phase. Darauf wird weiter unten genauer eingegangen. Der Einsatz von einem hohen Anteil bis hin zu ausschließlich γ-Cyclodextrin wird bevorzugt, wenn nicht-volatile apolare organische Substanzen und insbesondere Bitterstoffe durch die erfindungsgemäße Extraktion mittels Cyclodextrinen gewonnen werden sollen. Die Erfindung bietet dadurch auch die Möglichkeit, nicht-volatile Aromastoffe wie beispielsweise Bitterstoffe durch für deren Komplexierung ungünstige Bedingungen, insbesondere eines Ethanolgehaltes unter 40 Vol.-% und/oder die ausschließliche Verwendung von gamma-Cyclodextrin, selektiv aus einem Extrakt enthaltend organische Substanzen mit zumindest einem apolaren Rest zu entfernen.

Mit einer Mischung unterschiedlicher Cylcodextrine wie beispielsweise beta- Cylcodextrin mit gamma-Cylcodextrin besteht gemäß der Erfindung die Möglichkeit, Bitterstoffe vermehrt bis nahezu ausschließlich in den gamma-Cyclodextrinmolekülen und andere Aromen in vermehrt bis nahezu ausschließlich in den anderen Cyclodextrinmolekülen zu komplexieren. Bildlich gesagt suchen sich die "Gäste" dabei die besonders gut passenden "Wirte" für die Komplexbildung. Auf diese Weise kann über das Mengenverhältnis der verschiedenen Cyclodextrine auf die Zusammensetzung der entfernten organischen Substanzen mit zumindest einem apolaren Rest Einfluss genommen werden.

Cyclodextrin kann in Form einer Mischung mit Wasser, aber auch in zumindest einem mehreren anderen Lösungsmittel wie Glycerin, Propylenglykol, Dimethylsulfoxid (DMSO), Dimethylformamid (DMF), Ethylenglykol, verwendet. Bevorzugt wird Cyclodextrin in einer festen Form, so dass Cyclodextrin in einfacher Weise gehandhabt und als Feststoff zur Ausgangsmischung zugegeben werden kann. Mit der Verwendung von Cyclodextrin als Feststoff wird zudem keine zusätzliche Verdünnung der Ausgangsmischung durch mit dem Cylcodextrin eingebrachtes Lösungsmittel verursacht.

Die Mengen an Cyclodextrin werden in weiteren Grenzen variiert, doch werden vorzugsweise zwischen ca. 1 und ca. 100 Gew.-%, bevorzugt zwischen ca. 3 und ca. 50 Gew.-%, besonders bevorzugt zwischen ca. 3 und ca. 20 Gew.-%, bezogen auf die Menge an der Ausgangsmischung eingesetzt.

Das Durchmischen mindestens eines Cyclodextrins mit der Ausgangsmischung wird mit Hilfe jeder dem Fachmann bekannten Vorrichtung wie z.B. mechanischer Rührer, mechanischer Dispergator, Ultraschalldesintegrator, durchgeführt. Der Fachmann wird die Parameter Temperatur und Haltezeit dabei in Abstimmung auf Effektivität der Komplexbildung und unter Berücksichtigung der Prozesswirtschaftlichkeit wählen.

Generell können Temperatur und Haltezeit breit variiert werden. Bevorzugter Temperaturbereich liegt zwischen ca. 4 °C bis ca. 25 °C, bevorzugt im Bereich von ca. 4 °C bis ca. 15 °C, besonders bevorzugt im Bereich von ca. 4 °C bis ca. 10 °C, ganz besonders bevorzugt bei einer Temperatur von ca. 6 °C. Die Haltezeit kann bis zu 5 Tagen betragen, bevorzugt über einen Zeitraum von 20 Minuten bis 72 Stunden, besonders bevorzugt über einen Zeitraum von bis zu 48 Stunden.

In Rahmen der Erfindung wurde festgestellt, dass Cyclodextrine in wässrigen und alkoholischen Medien organische Substanzen mit zumindest einem apolaren Rest in ihrer Kavität reversibel aufnehmen können, wobei etwa 60 bis 99 Gew.-% der in der Ausgangsmischung vorhandenen Aromastoffe selektiv komplexiert werden können, während die übrigen Bestandteile der Ausgangsmischung weitgehend in der flüssigen Phase verbleiben. Diese Erkenntnis der reversiblen Aufnahme organischer Substanzen mit zumindest einem apolaren Rest wird mit dem erfindungsgemäßen Verfahren für die effiziente selektive Abtrennung dieser Substanzen nutzbar gemacht.

### Schritt (c)

Im Schritt (c) werden die in Schritt (b) gebildeten Cyclodextrin-AOS-Komplexe von der flüssigen Phase abgetrennt. Die gebildeten Cyclodextrin-AOS-Komplexe sind ziemlich stabil, das bedeutet, die im Komplex gebundene apolare organische Substanz wie etwa ein Aromastoff hat eine geringe Neigung, den Komplex beziehungsweise die Kavität des Cyclodextrins wieder zu verlassen. Die Komplexe sind daher stabil genug, um im wässrigen Medium mittels Filtrationstechniken angereichert zu werden. Sie können grundsätzlich mittels jeder in der Technik üblichen Verfahren und Methoden zur Trennung von Feststoffen und Flüssigkeiten abgetrennt werden, ohne dabei den Gast freizusetzen. Bevorzugte Trennverfahren für die Abtrennung des Cyclodextrin-AOS-Komplexes im Schritt (c) sind Filtration und/ oder Sedimentation und/oder Zentrifugierung, wobei die Filtration wie zum Beispiel durch Vakuum- oder Nano-Filtration oder Ultrafiltration besonders bevorzugt wird. Auch Umkehrosmose ist ein mögliches Trennverfahren für die Abtrennung des Cyclodextrin-AOS-Komplexes im Schritt (c).

In einer weiteren vorteilhaften Ausführungsform umfasst das erfindungsgemäße Verfahren einen weiteren Schritt
c1) Ruhenlassen vor der Abtrennung des Cyclodextrin-AOS-Komplexes von der flüssigen Phase
wobei die Ruhephase gemäß Schritt c1) insbesondere über eine Dauer von bis zu 24 Stunden, bevorzugt über eine Dauer von bis zu 12 Stunden, besonders bevorzugt über eine Dauer von 2 Stunden durchgeführt wird.

Das Ruhenlassen der mit Cyclodextrin versetzten Ausgangsmischung, in welcher sich der Cyclodextrin-AOS-Komplex bildet oder gebildet hat, unterstützt die Abtrennung der Komplexe. Es hat sich überraschenderweise herausgestellt, dass durch das Ruhenlassen eine schnellere Sedimentation und ein besseres Filtrationsverhalten erreicht wird. Das Ruhenlassen führt zur Sedimentation, und die Sedimentation ermöglicht es, dass eine im Wesentlichen Cyclodextrin-AOS-Komplex-freie Klarphase oberhalb des Cyclodextrin-AOS-Komplex-haltigen Sediments abgenommen werden kann. Damit vermindert sich das Gesamtvolumen, welches in Schritt c) abgetrennt, beispielsweise abfiltriert, werden muss. Schritt c) kann mit Hilfe der Sedimentation auch alleine durch das Abnehmen des Überstandes durchgeführt werden, um eine Cyclodextrin-AOS-Komplex-haltige Phase zu gewinnen.

Zur Verbesserung der Filtration bei Fest-Flüssig-Trennverfahren werden üblicherweise Filterhilfsstoffe verwendet. Diese können in Filterplatten, Filterschichten beziehungsweise Filterkerzen eingearbeitet sein oder aber auch direkt in die zu filtrierende Suspension als Sedimentationshilfe (Kieselgur, Cellulose, Bentonit, oder sonstige kationische Flockungsmittel) zugegeben werden. Physikalisch kann zum Beispiel mittel Zentrifugen die Sedimentation und damit die Abtrennung beschleunigt werden. Weitere Verfahren unter Zuhilfenahme von Filterhilfsmitteln sind Anschwemmfiltrationen. Wichtigstes Beispiel ist hier die Kieselgurfiltration oder auch die Filtration mit Perliten. Auf ein horizontal oder vertikal liegende Stützschicht wird dabei eine Filterschicht vorangeschwemmt. Die eigentliche Filtration wird unter ständiger Zugabe des Filterhilfsstoffes durchgeführt, um ein Verblocken des Filters zu verhindern.

Die Filterhilfsstoffe gewährleisten die Durchlässigkeit des Filters und verhindern somit, gerade bei einem Filter bestehend aus einer Filtrationsschicht, dass die Filterfläche nach und nach durch den sich aufbauenden Filterkuchen blockiert wird. Das Filtrat ist dabei meistens das gewünschte Produkt und das Retentat beziehungsweise der Filterkuchen wird verworfen.

Im Rahmen der Erfindung soll auf den Einsatz der oben genannten gängigen Filterhilfsstoffe verzichtet werden können, da der Cyclodextrin-AOS-Komplex als Filterkuchen abgetrennt wird, welcher in diesem Fall das gewünschte "Produkt" des Trennschritts c) darstellt. Würden die zuvor genannten, gängigen Filterhilfsstoffe verwendet, würden diese Filterhilfsstoffe zusammen mit dem Cyclodextrinkomplex das Retentat bilden. Der Filterhilfsstoff müsste aus dem Filterkuchen in einem weiteren Prozesschritt abgetrennt werden. Dies ist im Rahmen der Erfindung möglich. Eine deutliche Verbesserung in wirtschaftlicher, ökologischer und ernährungstechnischer Sicht wird aber damit erreicht, dass die Vermischung des Endprodukts mit Filterhilfsstoffen vermieden werden kann.

Untersuchungen zu Sedimentationsverhalten und Filtrationseingeschaften der unterschiedlichen Cyclodextrine haben gezeigt, dass Komplexe mit β-Cyclodextrin schneller sedimentieren als analoge Komplexe mit γ-Cyclodextrin. Außerdem zeigen Komplexe mit β-Cyclodextrin ein besseres Filtrationsverhalten als analoge Komplexe mit γ-Cyclodextrin, da sie derart agglomerieren, dass die Filterfläche deutlich weniger bis nahezu überhaupt nicht blockiert wird.

Produkte, die mit β-Cyclodextrin gewonnen werden, haben allerdings sensorisch nicht immer positive Eigenschaften. Mit γ-Cyclodextrin gewonnene Aromen sind hingegen sensorisch hochwertiger, sedimentieren aber langsam und blockieren die Filterfläche sehr schnell.

Es wurden daher Mischungen von beta-Cyclodextrin mit anderen Cyclodextrinen untersucht und es hat sich überraschenderweise gezeigt, dass bereits ein Einsatz relativ geringer Mengen von beta-Cyclodextrin, beispielsweise von 10 Gew.-% beta-Cyclodextrin, bezogen auf die Gesamtmasse an verwendeten Cyclodextrinen die Sedimentation signifikant beschleunigen kann. Die Erfindung stellt durch den Zusatz von beta-Cyclodextrin zu alpha-Cyclodextrin und/oder gamma-Cyclodextrin und /oder delta-Cyclodextrin, bevorzugt zu gamma-Cyclodextrin, eine Möglichkeit zur Beschleunigung der Sedimentation beziehungsweise Zentrifugation zur Verfügung.

In einer vorteilhaften Ausführungsform ist vorgesehen, dass der Anteil von beta-Cyclodextrin an der Gesamtmasse von Cyclodextrinen im Bereich von 0,5 Gew.-% bis zu 60 Gew.-%, bevorzugt im Bereich von 2 Gew.-% bis 50 Gew.-%, besonders bevorzugt im Bereich von 5 Gew.-% bis 15 Gew.-% liegt. Damit kann im Rahmen der Erfindung die Zusammensetzung der Cyclodextrine für den jeweiligen Anwendungsfall im Hinblick auf spezifische, aus einer Ausgangsmischung zu gewinnende organische Substanz oder Substanzen mit zumindest einem apolaren Rest und/oder auf die Geschwindigkeit des Abtrennungsschrittes wählen.

In Kombination mit 90 Gew.-% gamma-Cyclodextrin wurde die Sedimentation beispielsweise von einem Tag auf 2 Stunden beschleunigt. Ein mit Hilfe einer Mischung aus 10 Gew.-% beta-Cyclodextrin und 90 Gew.-% gamma-Cyclodextrin gewonnener Aromastoff hatte dabei sensorisch die gleiche Güte wie der entsprechende, aus reinem gamma-Cyclodextrin extrahierte Aromastoff.

Die Sedimentationsgeschwindigkeit wurde beispielhaft an einem Stoffsystem aus einem ethanolischen Bierextrakt mit 60 Vol.-% Ethanol und einer Aromastoffkonzentration im Bereich von 5 bis 8 Gew.-% gemessen. Unter dem Ausdruck "Aromastoff" wurden in diesem Fall alle im GC-Spektrum nachgewiesenen aromaaktiven Komponenten zusammengefasst. Die nach der Komplexierung erhaltene Suspension mit Cyclodextrin-Aromastoff-Komplexen im ethanolischen Extrakt wurden zeitgleich in gleiche Messzylinder überführt. Zeitlich aufgelöst in 30 min.-Intervallen wurden die Sediment-Volumina an der Skala des Messzylinders abgelesen. Auf diese Weise kann das Sedimentationsverhalten von gemäß der Erfindung in Cyclodextrin komplexierten Substanzen bestimmt werden.

Die Abtrennung des Cyclodextrin-AOS-Komplexes von der aus der Ausgangsmischung resultierenden flüssigen Phase kann ein wichtiger Schritt sein, um die Ausbeute an organischer Substanz mit zumindest einem apolaren Rest zu erhöhen. Soll beispielsweise ein Aromastoff aus einer Ethanol-haltigen Ausgangsmischung gewonnen werden, kann über die Fest-Flüssigtrennung der Cyclodextrin-Aromastoff-Komplexe vom ethanolischen Medium Einfluss genommen werden auf die Effizienz der folgenden, insbesondere enzymatischen, Behandlung der Komplexe.

Durch die Fest-Flüssigtrennung wird ein Filterkuchen gebildet, welcher den Cyclodextrin-AOS-Komplex enthält. Ist dieser Filterkuchen nicht "trocken" genug, kann im Fall der Aromastoffabtrennung aus einem ethanolischen Medium der noch vorhandene Alkohol den späteren enzymatischen Abbau des Cyclodextrinkomplexes behindern. Bei einer Einschichtfiltration baut sich zudem der Filterkuchen nach und nach auf, wodurch die Filterschicht blockieren kann und der Trennschritt aus Zeitgründen unwirtschaftlich wird. Filterhilfsstoffe können in solchen Situationen verhindern, dass der sich aufbauende Filterkuchen die Filterschicht blockiert.

Es war für die Erfinder überraschend zu erkennen, dass β-Cyclodextrin nicht nur als Extraktionsmittel für eine apolare organische Substanz, die als Gast komplexiert wird, sondern auch als Filterhilfsstoff dienen kann. β-Cyclodextrin als Filterhilfsstoff kann vorteilhafterweise im Filterkuchen verbleiben und in einem weiteren Schritt enzymatisch in für den Einsatz in Lebensmitteln unbedenkliche Stoffe abgebaut werden. β-Cyclodextrin als Filterhilfsstoff ist damit dem zur Komplexierung der apolaren organischen Substanzen verwendeten Stoffe weitestgehend ähnlich und hat dieselben chemischen und physikalischen Eigenschaften.

Die Erkenntnis, dass beta-Cyclodextrin, wie auch das gamma-Cyclodextrin, Aromastoffe an sich bindet und zusätzlich als Filterhilfsstoff dient, war für die Erfinder neu. Nachdem beta-Cyclodextrin in dem erfindungsgemäßen Verfahren sozusagen als Extraktions- und zudem auch als Filterhilfsmittel verwendet wurde, kann das beta-Cyclodextrin im Rahmen der Erfindung durch den Einsatz von Enzymen abgebaut werden, wodurch gleichzeitig die komplexierten Aromastoffe wieder freigesetzt werden. Als Abbauprodukte der Cyclodextrine finden sich nur Mono-, Di- und Oligosaccharide, die üblicherweise in Lebensmitteln oder Genussmitteln vorkommen und somit dort verbleiben können. Darauf wird weiter unten noch näher eingegangen. Somit wird das oben beschriebene Problem der Vermischung und des Verbleibs von Filterhilfsstoffen im Produkt mit Hilfe der Erfindung verhindert.

Das Produkt weist somit dieselbe ernährungsphysiologische Reinheit und Qualität wie bei der Verwendung alleine von gamma-Cyclodextrin auf, bei gleichzeitig deutlich verbesserter Prozessierbarkeit. Die Qualtität bezieht sich hier insbesondere auf die sensorische Qualität in Bezug auf die apolare organische Substanz. Bei Aromastoffen führt beispielsweise ein zu hoher Gehalt an beta-Cyclodextrin zu einer Veränderung des Geschmacksprofils, da manche Aromabestandteile zu Lasten von anderen bevorzugt komplexiert werden. Die Süße aus den Abbauprodukten des Cyclodextrins ist bei der Berücksichtigung der End-Dosage jedoch meist vernachlässigbar.

Diese Erfindung wurde an dem oben beschriebenen ethanolischen Bierextrakt erprobt. Der Test umfasste die Komplexierung von Aromastoffen in gamma-/beta-Cyclodextrinmischungen, Messung der Sedimentationsgeschwindigkeit, Trocknung des Filterkuchens, enzymatischen Abbau von Cyclodextrinen zur Wiederfreisetzung des Aromastoffes, analytische Bestimmung der Aromakonzentration und des Aromaprofils sowie die sensorische Beurteilung der so hergestellten Muster. Die Aromastoffkonzentration wurde als Summe aller für Bier typischen Aromastoffkomponenten mittels Gaschromatographie quantifiziert. Die Menge an restlichem Cyclodextrin wurde mittels HPLC mit RI-Detektor gemessen. Bereits 10 Gew.-% beta-Cyclodextrin in der verwendeten Cyclodextrinmischung reichen demnach aus, um die Sedimentationsgeschwindigkeit von 1 Tag auf 2 Stunden zu beschleunigen. Das Endprodukt ist ein im Vergleich zur Ausgangsmischung konzentriertes wässriges Aromaextrakt von für Bier typischen Aromastoffen. Dieses wurde mit einer Dosage von 1:1000 erfolgreich in ein Bier mit einem Alkoholgehalt von 0,0 Vol.-% appliziert. Der Ausdruck "erfolgreich" bedeutet, dass die Zugabe des Endproduktes ein für Bier charakteristisches Aromaprofil verursacht. Die Dosage ist dabei so niedrig, dass der Ethanolgehalt in der Endapplikation unter 0,05 Vol.-% liegt und diese somit als "0,0 Vol.-%"-Bier deklariert werden kann. Das Endprodukt ist zudem klar und somit ohne Weiteres auch für typischerweise klare Biere wie Pils anwendbar.

Die durch die Abtrennung des Cyclodextrin-AOS-Komplexes im Schritt (c) erhaltene, abgetrennte flüssige Phase kann zur Maximierung der Ausbeute ggf. erneut mit zumindest einem Cyclodextrin versetzt und insbesondere in Schritt a) rückgeführt werden.

In einer Weiterbildung der Erfindung ist vorgesehen, dass der im Schritt (c) abgetrennte Cyclodextrin-AOS-Komplex vor der enzymatischen Behandlung im Folgenden näher erläuterten Schritt (d) in einem Schritt d1) mit Wasser bis zu einer gewünschten Endkonzentration an einem oder mehreren Aromastoffen beziehungsweise an Cyclodextrin-AOS-Komplex verdünnt wird. Auf diese Weise können die Bedingungen für eine möglichst vollständige Freisetzung der extrahierten apolaren organischen Substanz(en) verbessert werden.

### Schritt (d)

Die im Schritt (c) abgetrennte feste Phase, die Cyclodextrin-AOS-Komplexe enthält, wird im Schritt (d) einer enzymatischen Behandlung mit mindestens einem Enzym unterworfen, welches aus der Gruppe ausgewählt ist, die Enzyme mit Amylaseaktivität, bevorzugt alpha-Amylase, besonders bevorzugt mit Fungal-alpha-Amylase, Pulluanase und/oder Isoamylase, sowie Mischungen aus zumindest zwei der genannten Enzyme umfasst, um das Cyclodextrin in diesen Komplexen zu hydrolysieren.

Das resultierende Gemisch wird optional filtriert.

Bei der gezielten Enzymierung der Wirt-Gast-Komplexe wird die Ringform des Cyclodextrins aufgebrochen und es werden die zuvor komplexierten und optional durch Filtration angereicherten Zielsubstanzen wieder ohne thermische Energie freigesetzt. Die verfügbaren alpha-, beta, gamma- und delta- Cyclodextrine und die mit diesen Cyclodextrinen als Wirt gebildeten Komplexe können von unterschiedlichen Enzymen, insbesondere unterschiedlichen Amylasen, teilweise selektiv hydrolysiert werden. Dadurch ermöglicht die Erfindung ein Prozessdesign, das die kaskadierte Freisetzung von apolaren organischen Substanzen wie beispielsweise Aromastoffen erlaubt.

Nach Schritt (d) wird eine mit mindestens einem Aromastoff beladene Komposition erhalten. Diese Komposition enthält auch die Abbauprodukte des Cyclodextrins, wie z.B. Mono-, Di- und Oligosaccharide. Diese Abbauprodukte kommen üblicherweise in Lebensmitteln vor und können somit dort verbleiben oder nach Bedarf entfernt werden.

Diese enzymatische Behandlung gemäß Schritt d) des erfindungsgemäßen Verfahrens wird in Gegenwart von Wasser durchgeführt. In einer Ausführungsform der Erfindung wird vor Schritt d) ein Schritt d1) durchgeführt, in welchem die in Schritt c) abgetrennte feste Phase mit Wasser versetzt wird, bis die gewünschten Endkonzentration an einem oder mehreren Aromastoffen erreicht ist. Bevorzugt wird eine Endkonzentration von mindestens 100 Gew.-% bis zu ca. 3750 Gew.-% Wasser bezogen auf das Gesamtgewicht der in Schritt c) abgetrennten festen Phase verwendet.

Das in einem Schritt d1) zugegebene Wasser weist in einer Ausführungsform der Erfindung eine Temperatur auf, die im Bereich von 4 bis 80 °C, bevorzugt im Bereich von 20 bis 60 °C liegt. Der pH-Wert kann abgestimmt auf das verwendete Enzym eingestellt werden und liegt bevorzugt bei pH 3,5 bis pH 7,5, besonders bevorzugt bei 4,5 oder im Bereich von 5,2 bis pH 5,6. Anschließend wird die erhaltene wässrige Mischung mit mindestens einem Enzym behandelt, welches aus der Gruppe ausgewählt ist, die Enzyme mit Amylaseaktivität, bevorzugt alpha-Amylase, besonders bevorzugt mit Fungal-alpha-Amylase, Pulluanase und/oder Isoamylase, sowie Mischungen aus zumindest zwei der genannten Enzyme, bevorzugt eine Mischung von zwei Amylasen, und Enzyme, welche als Nebenaktivität Cyclodextrine abbauen können, umfasst.

Durch Verwendung von unterschiedlichen Enzymen, insbesondere unterschiedlichen Amylasen, können die verwendeten α-, β- und/ oder γ-Cyclodextrine in den Komplexen teilweise selektiv hydrolysiert werden. Dies ermöglicht somit ein Verfahren, in dem die Aromastoffe kaskadierend freigesetzt werden.

Besonders bevorzugt ist alpha-Amylase, ganz besonders bevorzugt wird mit Fungal-alpha-Amylase behandelt. Diese Fungal-alpha-Amylase wird bevorzugt allein verwendet.

Die erfindungsgemäß verwendeten Fungal-alpha-Amylasen stammen aus Mikroorganismen, wie z.B. Aspergillus niger und Aspergillus oryzae. Ein gut geeignetes Handelsprodukt von Fungal-alpha-Amylase wird unter der Bezeichnung "Fungamyl^{®}" von der Firma "Novozymes" vertrieben. Eine weitere geeignete Amylase wird unter der Bezeichnung "Dextrozyme GA" von der Firma "Novozymes" vertrieben.

Es ist bekannt, dass Enzyme unterschiedlicher Herkunft unterschiedliche Reaktivitäten aufweisen. Die erforderliche Menge des Enzyms für jedes Gemisch variiert von Gemisch zu Gemisch und von Enzym zu Enzym. Die bevorzugte Menge an Enzym, das zum Hydrolysieren eines Cyclodextrins in einem Cyclodextrin-Aromastoff-Komplex verwendet wird, richtet sich im Wesentlichen nach dem Gehalt an der im Schritt (c) abgetrennten festen Phase, die Cyclodextrin-Aromastoff-Komplex enthält, und kann auch von der Aktivität des Enzyms abhängig sein.

In Rahmen der Erfindung wurde gefunden, dass die bevorzugte Menge an dem zumindest einen Enzym 5 bis 1000 FAU pro Gramm der in Schritt c) abgetrennten festen Phase beträgt. Die Größe "FAU" bedeutet "Fungal alpha-Amylase Unit" und ist eine Maß für die Aktivität einer alpha-Amylase, die von der Firma "Novozymes" z.B. für den Enzym "Fungamyl^{®}" verwendet wird. Genauer gesagt, 1 FAU eines Enzyms baut unter Standardbedingungen (Substrat: lösliche Stärke, Inkubationszeit 7 bis 20 Min, Temperatur 37 °C, pH 4,7) 5,26 g Stärke in einer Stunde ab.

Die Behandlungsbedingungen wie Temperatur und Zeitraum können in insbesondere in Schritt d) in weiteren Grenzen variiert werden, doch haben sich Temperaturen zwischen ca. 4 und ca. 80 °C, bevorzugt zwischen ca. 20 bis ca. 60 °C, als vorteilhaft erwiesen, wobei Behandlungszeiten von 0,5 bis 50 Stunden üblich sind. Der pH-Wert kann bei pH 3,5 - 7,5, besonders bevorzugt bei pH 5,2 - 5,6 liegen. Besonders bevorzugt ist das Inkubieren in einem geschlossenem Gefäß.

Nach der enzymatischen Behandlung beträgt die maximale Cyclodextrin-Endkonzentration ca. 0,1 Gew.-% bezogen auf das Gesamtgewicht der wässrigen Mischung. Die Menge des Cyclodextrins in der Mischung wird unter Anwendung bekannter Methoden, nämlich mittels HPLC bestimmt.

Darüber hinaus können zusätzlich weitere Enzyme eingesetzt werden. Zum Beispiel können geeignete Enzyme, wie z.B. Pulluanase und/ oder Isoamylase, vor der Behandlung mit mindestens einer Amylase und/ oder in einer Kombination mit mindestens einer Amylase verwendet werden.

In einer Weiterbildung der Erfindung wird das Enzym inaktiviert und/oder aus der Komposition, welche die aus dem Cyclodextrin-AOS-Komplex durch enzymatische Behandlung herausgelöste apolare organische Substanz enthält, abgetrennt. Dazu kann beispielsweise Propylenglykol (PG) oder Glycerin verwendet werden.

Mit dem Verfahren gemäß der vorliegenden Erfindung wird eine Komposition bereitgestellt umfassend
- mindestens eine organische Substanz mit zumindest einem apolaren Rest, welche aus der Gruppe ausgewählt ist, welche volatile Aromastoffe, nicht-volatile Aromastoffe wie zum Beispiel Bitterstoffe, Öl-, Fett- und/oder Wachsfraktionen, Farbstoffe, Klebstoffe, insbesondere aus pflanzlichen und/oder tierischen Ausgangsmaterialien, sowie Mischungen aus zumindest zwei der genannten Substanzen umfasst, und
- zumindest ein Saccharid mit einer Kettenlänge von 6 oder 7 oder 8 oder 9 Glukoseeinheiten sowie optional Abbauprodukte mindestens eines Cyclodextrins, insbesondere Glukose und/oder Maltose.

Die Komposition kann aus der mindestens einer organischen Substanz mit zumindest einem apolaren Rest und zumindest einem Saccharid mit einer Kettenlänge von 6 oder 7 oder 8 oder 9 Glukoseeinheiten sowie optional Abbauprodukten mindestens eines Cyclodextrins, insbesondere Glukose und/oder Maltose, bestehen.

In einer bevorzugten Ausführungsform weist die Komposition einen Ethanolgehalt von 0,0 Vol.-% auf.

Die Komposition stellt bevorzugt eine wässrige Komposition dar. Die Komposition kann dann je nach Verwendungszweck weiterverarbeitet werden. So ist es möglich, mindestens ein in der Komposition vorhandenes Enzym durch Erhitzen und/ oder durch Änderung des pH-Wertes oder den Einsatz beispielsweise von PG oder Glycerin zu inaktivieren. Je nach Art der zumindest einen apolaren organischen Substanz und nach verwendeten Enzymen oder Organismen zum Abbau des Cyclodextrins kann auch die apolare organische Substanz selbst eine Inaktivierung bewirken oder unterstützen.

Die Abbauprodukte mindestens eines Cyclodextrins und des Enzyms können aus der Komposition durch gängige "downstreaming"-Verfahren wie zum Beispiel Flüssig/Flüssig-Extraktion unter Erhalt der unverdünnten apolaren organischen Substanz entfernt werden, so dass die erhaltene Komposition lediglich mindestens einen apolare organische Substanz, insbesondere mindestens einen Aromastoff, der sowohl tierischen als auch pflanzlichen Ursprunges sein kann, enthalten kann. Wenn die Löslichkeit apolare organische Substanz in Wasser überstiegen wird, trennt sich diese Substanz als Ölphase oder Feststoff ab. So kann die apolare organische Substanz zusätzlich von der wässrigen, zuckerhaltigen Phase abgetrennt werden.

Eine weitere Möglichkeit zur Abtrennung der Abbauprodukte mindestens eines Cyclodextrins ist ihre Oxidation zu Säuren, die anschließend durch Adsobern, Anionenaustauschern oder über Bilden von Chelaten entfernt werden können.

Die Erfindung stellt damit ein Verfahren zur Verfügung zum Aromatisieren und/oder Stabilisieren eines Produkts, das ein Lebensmittel-, Genussmittel-, Kosmetik- oder Pharmaprodukt darstellt, in dem die oben beschriebene Komposition oder die mit einem oben beschriebenen Verfahren hergestellte Komposition dem zu aromatisierenden Produkt zugesetzt wird, zur Verfügung. Ein solches Produkt kann dann vorteilhafterweise mit der Bezeichnung "ohne Alkohol" (Alkoholgehalt also bei 0,0 Vol.-%) und/oder mit der Bezeichnung "FTNS" ausgelobt werden. Je nach gewonnener organischer Substanz mit zumindest einem apolaren Rest stellt die Erfindung neben einem Verfahren zum Aromatisieren auch ein Verfahren zum Stabilisieren von Produkten, beispielsweise mit Hilfe von Öl-, Fett- und/oder Wachsfraktionen als Coating oder Coatingbestandteil und/oder mit, beispielsweise phenolischen, Substanzen zur Farbstabilisierung.

Bei dem erfindungsgemäßen Verfahren zur Aromatisierung und/oder Stabilisierung eines Produktes, insbesondere eines Lebensmittel-, Genussmittel-, Kosmetik- oder Pharmaproduktes, in dem die mit dem oben beschriebenen Verfahren hergestellte Komposition mit dem zu aromatisierenden und/oder zu stabilisierenden Produkt in Kontakt gebracht wird, kann dieses "in-Kontakt-bringen" mit Hilfe jedes dem Fachmann bekannten, zu diesem Zwecke geeigneten Verfahren, bevorzugt Mischen, durchgeführt werden.

Mit dem erfindungsgemäßen Verfahren wird ein Lebensmittel- oder Genussmittel- oder Kosmetik- oder Pharmaprodukt, das die erfindungsgemäße Komposition enthält, die durch das oben beschriebene Verfahren hergestellt wurde, hergestellt. Besonderes bevorzugt ist ein Lebensmittel- oder Genussmittel oder Kosmetik- oder Pharmaprodukt, das ein Getränk, ganz besonderes bevorzugt Bier, darstellt, und das als mit der Bezeichnung "ohne Alkohol" (Alkoholgehalt also bei 0,0 Vol.-%) und/oder "FTNS" ausgelobt werden kann.

Die Erfindung soll anhand der beigefügten Abbildungen und den Ausführungsbeispielen näher erläutert werden, ohne jedoch auf die jeweils speziell beschriebene Ausführungsform beschränkt zu sein. Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind. Es zeigen:

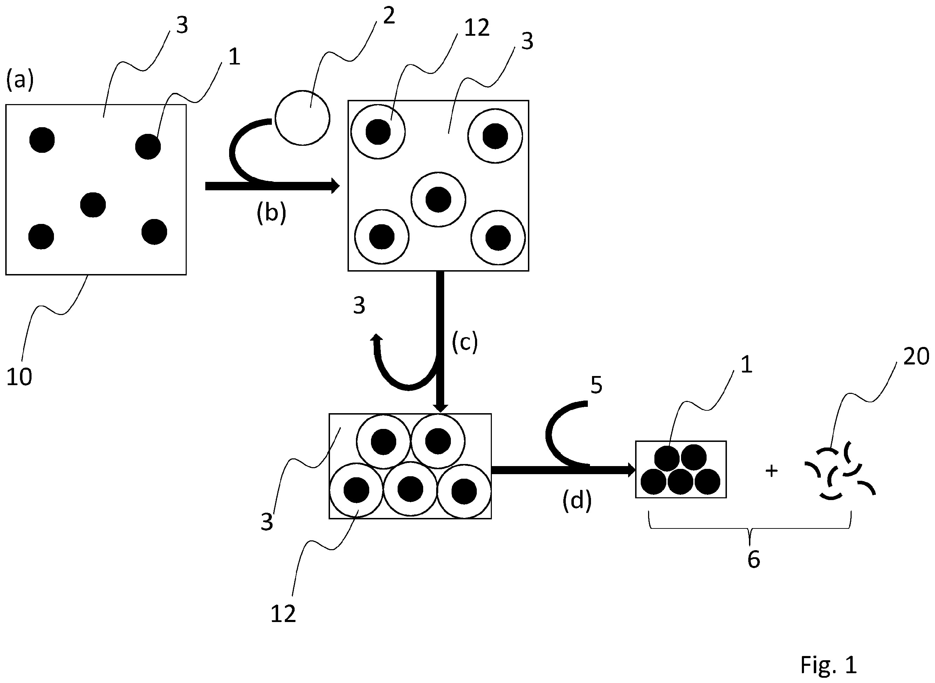

- Figur 1: eine schematische Darstellung des Verfahrens zur selektiven Abtrennung zumindest einer organischen Substanz mit zumindest einem apolaren Rest (AOS) in einer ersten Ausführungsform am Beispiel der Abtrennung eines Aromastoffes aus wässriger Lösung wie z.B. aus einem Fermentat,

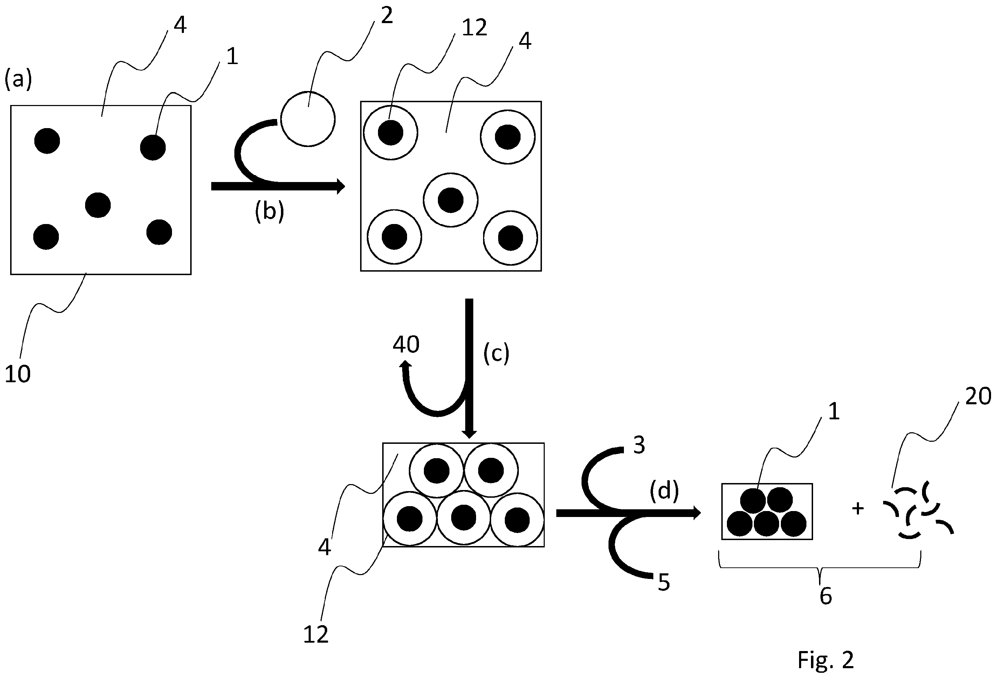

- Figur 2: eine schematische Darstellung des Verfahrens zur selektiven Abtrennung zumindest einer organischen Substanz mit zumindest einem apolaren Rest (AOS) in einer zweiten Ausführungsform am Beispiel der Abtrennung eines Aromastoffs aus einem ethanolischen Extrakt wie z.B. resultierend aus einer SPE,
und

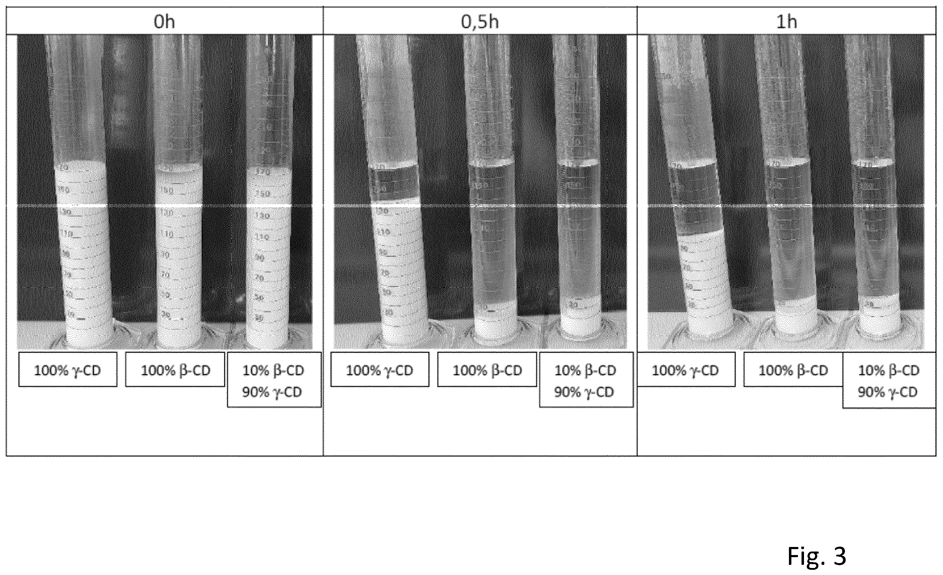

- Figur 3: Fotografische Aufnahmen zu einem Vergleichsversuch der Sedimentationsgeschwindigkeit von gamma-Cyclodextrin-(links), beta-Cyclodextrin-Aromakomplex (in der Mitte) und entsprechenden Komplexen in einer Mischung (rechts) aus 10 Gew.-% beta- und 90 Gew.-% gamma-Cyclodextrin bezogen auf die Gesamtmasse an Cyclodextrin.

In Figur 1 ist eine schematische Darstellung einer Ausführungsform des Verfahrens zur selektiven Abtrennung zumindest einer organischen Substanz mit zumindest einem apolaren Rest (AOS) dargestellt. Zunächst wird als Schritt (a) einer Ausgangsmischung 10 bereitgestellt, die als eine apolare organische Substanz einen Aromastoff 1 in wässriger Lösung enthält. Ein solches Aroma auf Wasserbasis 3 kann beispielsweise ein Fermentat sein, welches insbesondere eine geringe Aromastoffkonzentration aufweisen kann und optional zumindest ein Lösungsmittel enthält. Als Schritt (b) wird die Ausgangsmischung 10 aus Aromastoff 1 in Wasser 3 in Kontakt gebracht mit mindestens einem Cyclodextrin 2. In Schritt a) wird als Lösungsmittel, bereits Wasser zugegeben. Der Kontakt des mindestens einen Cyclodextrins 2 mit der zumindest einen apolaren organischen Substanz 1 der Ausgangsmischung 10 zum Erhalt zumindest eines Cyclodextrin-AOS-Komplexes 12. Durch die Komplexbildung erfolgt eine Extraktion des Aromastoffs als apolarer organischer Substanz aus dem Lösungsmittel Wasser 3 der Ausgangsmischung 10. Die Komplexe 12 liegen in einer wässrigen Phase vor.

In Figur 1 dargestellt ist weiter die Fortsetzung des Verfahrens, wobei als Schritt (c) die Abtrennung des Cyclodextrin-AOS-Komplexes 12 von der flüssigen Phase unter Entzug von Wasser 3 erfolgt. Als Schritt (d) wird daran anschließend der Aromastoff 1 aus dem Cyclodextrin-AOS-Komplex 12 durch enzymatische Behandlung freigesetzt. Man erhält ein eine mit der apolaren organischen Substanz, hier dem Aromastoff 1, beladene Komposition 6. Diese umfasst das aufkonzentriertes Aroma 1 und als Nebenprodukt der enzymatischen Behandlung Saccharide 20.

In Figur 2 ist eine schematische Darstellung einer weiteren Ausführungsform des Verfahrens zur selektiven Abtrennung zumindest einer apolaren organischen Substanz (AOS) dargestellt. Zunächst wird als Schritt (a) einer Ausgangsmischung 10 bereitgestellt, die als ein ethanolischer Extrakt, beispielsweise aus einer Festphasenextraktion SPE, einen Aromastoff 1 in einer ethanolhaltigen Lösung 4 enthält, welche beispielsweise 80 Vol.-% Alkohol (Ethanol) enthält. Als Schritt (b) wird die Ausgangsmischung 10 aus Aromastoff 1 in ethanolhaltiger Lösung 4 in Kontakt gebracht mit mindestens einem Cyclodextrin 2. Der Kontakt des mindestens einen Cyclodextrins 2 mit der zumindest einen apolaren organischen Substanz 1 der Ausgangsmischung 10 führt zum Erhalt zumindest eines Cyclodextrin-AOS-Komplexes 12. Durch die Komplexbildung erfolgt eine Extraktion des Aromastoffs als apolarer organischer Substanz aus der alkoholhaltigen Lösung 4 der Ausgangsmischung 10. Die Komplexe 12 liegen in einer wässrigen, alkoholhaltigen Phase 4 vor.

In Figur 2 dargestellt ist weiter die Fortsetzung des Verfahrens, wobei als Schritt (c) die Abtrennung des Cyclodextrin-AOS-Komplexes 12 von der flüssigen Phase unter Entzug von Ethanol 40 erfolgt. Als Schritt (d) wird daran anschließend der Aromastoff 1 aus dem Cyclodextrin-AOS-Komplex 12 durch enzymatische Behandlung freigesetzt. Dazu wird die feste Phase des in Schritt c) abgetrennten Komplexes 12 aus Cyclodextrin und - hier -Aromastoff Wasser 3 zugesetzt, um geeignete Bedingungen für die enzymatische Behandlung zu schaffen. Aus Schritt (d) erhält man eine mit der apolaren organischen Substanz, hier dem Aromastoff 1, beladene Komposition 6. Diese umfasst das aufkonzentriertes Aroma 1 und als Nebenprodukt der enzymatischen Behandlung Saccharide 20. Die Komposition kann, je nach Verfahrensführung und abhängig davon, welche Ethanolkonzentrationen in der Komposition für den betreffenden Anwendungsfall toleriert werden können, beispielsweise bis zu 10 Vol.-% Ethanol enthalten.

In Figur 3 sind von links nach rechts drei Fotos wiedergegeben. Diese zeigen Aufnahmen einer Versuchsanordnung aus drei Kolben. Die Kolben sind mit Suspensionen von Cyclodextrin-AOS-Komplexen befüllt. Im jeweils links positionierten Kolben sind Komplexe von gamma-Cyclodextrin enthalten, im jeweils mittigen Kolben Komplexe von beta-Cyclodextrin und im jeweils rechts positionierten Kolben Komplexe in einer Mischung (rechts) aus 10 Gew.-% beta- und 90 Gew.-% gamma-Cyclodextrin bezogen auf die Gesamtmasse an Cyclodextrin. Neben diesen Cyclodextrinen enthalten die gezeigten Suspensionen ethanolhaltigen Bierextrakt; in jedem Messzylinder befinden sich 150 g des Bierextraktes und 9 g beta- oder gamma-Cyclodextrin beziehungsweise 9 g der Mischung aus beta- und gamma-Cyclodextrin. Die Suspensionen wurden über 48 Stunden bei 6°C in Gegenwart der verschiedenen Cylcodextrine beziehungsweise der Cyclodextrin-Mischung gerührt und dann gleichzeitig in die Messzylinder überführt.

Man erkennt nach dem Start des Vergleichsversuchs zum Zeitpunkt 0h (linkes Bild) über die Dauer von 0,5 h (mittleres Bild) bis zu einer Dauer von 1 h (rechtes Bild) die Sedimentation der Partikel aus den Suspensionen, wobei diejenigen aus der beta-Cyclodextrin-haltigen Suspension bereits nach 0,5 h sedimentiert sind und damit doppelt so schnell wie die Partikel aus der gamma-Cyclodextrin-haltigen Suspension, bei welcher sich erst nach 1 h Versuchsdauer ein vom Sediment unten im Kolben optisch unterscheidbarer klarer Überstand zeigt.

Die Suspension mit der Mischung aus nur 10 Gew.-% beta- und mit 90 Gew.-% gamma-Cyclodextrin bezogen auf die Gesamtmasse an Cyclodextrin überwiegend gamma-Cyclodextrin zeigt dabei überraschenderweise denselben optischen Eindruck des Sedimentationsverhaltens wie die Suspension, welche als Cyclodextrin alleine beta-Cyclodextrin enthält. Ein Zusatz von beta-Cyclodextrin zu gamma-Cyclodextrin im Verhältnis von unter 1:1 reicht gemäß der Erfindung somit aus, um die Absetzgeschwindigkeit von Suspensionen mit gamma-Cyclodextrin auf Werte wie für die Absetzgeschwindigkeit von Suspensionen alleine mit beta-Cyclodextrin zu erhöhen.

### Ausführungsbeispiele:

### Beispiel 1 zur Aromatisierung von z.B. 0,0 Vol.-% Alkohol-Bieren

Ein ethanolhaltiger (70-80 Vol.-%) Festphasenextrakt [1 kg mit einer Aromakonzentration von 4 g/L], welcher Isoamylalkohol, Isoamylacetat, Phenylethylalkohol, Hexansäure, Ethyl-hexanoat und weitere Aromastoffe enthält, wird mit 60 g α-, β-, und/ oder γ-Cyclodextrin, bevorzugt mit γ-Cyclodextrin, versetzt. Das Gemisch wird über 48 h bei 6 °C gerührt. Der Aromastoff-Cyclodextrin-Komplex wird mittels Filtration abgetrennt und getrocknet. Der ethanolische Festphasenextrakt kann zur Ausbeutemaximierung erneut mit α-, β-, und/ oder γ-Cyclodextrin, bevorzugt mit γ-Cyclodextrin, 30 g pro kg Festphasenextrakt versetzt werden. Der so gewonnene alkoholfreie Filterkuchen wird in Wasser aufgenommen und für die Freisetzung des Aromastoffes enzymatisch behandelt. Hierzu wird die wässrige Mischung mit 1 µL/ mL Amylase (Fungamyl^{®} von Novozymes) (1 Mikroliter Amylase pro 1 Milliliter wässriger Mischung) versetzt und für 48 h bei 55 °C und einem pH von 5,2 in einem geschlossenen Gefäß inkubiert (die maximale Cyclodextrinendkonzentration beträgt 0,1 Gew.-% bezogen auf das Gesamtgewicht des wässrigen Extraktes). Die Löslichkeit der extrahierten Aromabestandteile in Wasser ist gering, weshalb das resultierende Zweiphasengemisch, falls nötig, mit Propylenglykol (bis zu 1:1 w/w) homogenisiert und anschließend filtriert werden kann.

Das erhaltene alkoholfreie, aromareiche Produkt (5 g/ L) kann nun zur Aromatisierung von z.B. 0,0 Vol.-% Alkohol-Bieren verwendet werden (Dosage für Applikation: 0,2:1000).

Im Rahmen der Erfindung wird der Gehalt an Cyclodextrin und insbesondere die Cyclodextrinendkonzentration in einer Komposition mittels HPLC ermittelt (Detektor: RI; Trennsäule: Polysep GFC-P 2000 von Phenomenex; Laufmittel: 10% Methanol in Wasser (isokratisch); Fluss: 0,5 mL/ min; Druck: 25 bar; Ofentemperatur: 55 °C; Laufzeit: 30 Minuten).

Die Konzentration an apolarer organischer Substanz, beispielsweise die Aromakonzentration, der erfindungsgemäßen Komposition, insbesondere eines alkoholfreien Extraktes, wird mittels GC-FID ermittelt (2 g Probe wurden mit 2 g Cyclohexan extrahiert. Die organische Phase wird über Na₂SO₄ getrocknet, mit internem Standard versetzt und analysiert).

### Beispiel 2 zur Aromatisierung von z.B. 0,0 Vol.-% Alkohol-Bieren

Ein Fermentat, welches Isoamylacetat oder 4-Vinylguaiacol enthält, wird mit bezgl. des Aromastoffes einem Moläquivalent β-Cyclodextrin (α- und/ oder γ-) versetzt. Um einen stabilen Aromastoff-Cyclodextrin-Komplex zu erhalten, wird das Gemisch 48 h bei 6 °C gerührt.

Der Aromastoff-Cyclodextrin-Komplex wird mittels Filtration abgetrennt bzw. auf der Retentatseite aufkonzentriert.

Die Freisetzung des Aromastoffes erfolgt durch eine enzymatische Behandlung des Aromastoff-Cyclodextrin-Komplexes. Hierzu wurde die wässrige Mischung mit 1 µL/ mL Amylase (Fungamyl^{®} von Novozymes) (1 Mikroliter Amylase pro 1 Milliliter wässriger Mischung) versetzt und für 48 h bei 55 °C und pH von 5,2 in einem geschlossenen Gefäß inkubiert (die maximale Cyclodextrinendkonzentration beträgt 0,1 Gew.-% bezogen auf das Gesamtgewicht des wässrigen Extraktes). Die Löslichkeit der extrahierten Aromabestandteile in Wasser ist gering, weshalb das resultierende Zweiphasengemisch, falls nötig, mit Propylenglykol (bis zu 1:1 w/w) homogenisiert und anschließend filtriert werden kann.

Das erhaltene alkoholfreie, aromareiche Produkt kann nun zur Aromatisierung von z.B. in 0,0 Vol.-% Alkohol-Bieren verwendet werden. Die Cyclodextrinendkonzentration wird mittels HPLC ermittelt (Detektor: RI; Trennsäule: polysep GFC-P 2000 von Phenomenex; Laufmittel: Wasser (isokratisch); Fluss: 0,8 mL/min; Druck: 20 bar; Ofentemperatur: 55 °C; Laufzeit: 30 Minuten). Die Aromakonzentration des alkoholfreien Extraktes wird mittels GC-FID ermittelt (2 g Probe wurden mit 2 g Cyclohexan extrahiert. Die organische Phase wird über Na₂SO₄ getrocknet, mit internem Standard versetzt und analysiert).

### Beispiel 3 zur Aromatisierung von 0,0 Vol.-% Alkohol-Getränken

Ein ethanolhaltiges (70-80Vol%) Festphasenextrakt (oder eine Spirituose oder Likör (15-96 %Vol)), welches Isoamylalkohol, Isoamylacetat, Phenylethylalkohol und weitere Aromastoffe enthält, wurde mit 60 g/L einer beta- und gamma-Cyclodextrinmischung (1:9) versetzt. Um einen hinreichend stabilen Wirt-Gast-Komplex zu erhalten, wurde das Gemisch über Nacht bei 6 °C gerührt. Die Mischung wurde anschließend zur Sedimentation für 2 Stunden ruhen gelassen (ohne beta-Cyclodextrin kann dieser Vorgang bis zu einem Tag dauern).

Nach der Sedimentation wurde die klare Phase abgenommen und das Sediment mittels Filtration getrocknet.

Das an Aroma abgereicherte ethanolische klare Festphasenextrakt kann, zur Ausbeutenmaximmierung, erneut mit einer beta- und gamma-Cyclodextrinmischung (1:9) versetzt werden und dann der Ruhe mit Abnahme der klaren Phase nach der Sedimentation und anschließender Filtration unterworfen werden.

Der so gewonnene alkoholfreie Filterkuchen wurde in Wasser aufgenommen und für die Freisetzung des Aromas enzymatisch behandelt. Hierzu wurde die wässrige Mischung mit 1 µL / mL (Mikroliter pro Milliliter) Amylase Dextrozyme GA (Novozymes) versetzt und für 48 h bei 55 °C und pH 4,5 in einem geschlossenem Gefäß inkubiert. Das resultierende Gemisch wurde abschließend filtriert.

Das erhaltene alkoholfreie, aromareiche Produkt kann nun in niedriger Dosage, beispielsweise im Bereich von 0,01:1000 bis 50:1000, zur Aromatisierung von z.B. in 0,0 Vol.-% Alkohol-Bieren verwendet werden.

### Beispiel 4 zur Extraktion von apfelwachshaltiger Fraktion aus getrocknetem Apfeltrester

1600 g trockener Apfeltrester wurde mit 8000 g einer 36 Gew.-%igen wässrigen Cyclodextrinlösung (beta-Cyclodextrin:gamma-Cyclodextrin im Verhältnis 1:1, also 18 g beta- und 18 g gamma-Cyclodextrin auf 1 L Wasser) versetzt und 2 Tage bei Raumtemperatur geknetet. Der nasse Apfeltrester wurde anschließend abfiltriert und das Cyclodextrin-Apfelwachs-Komplex-reiche Filtrat als Suspension gesammelt.

Die Suspension wurde als Schritt c) des erfindungsgemäßen Verfahrens zentrifugiert und die klare Phase abdekantiert.

Der so gewonnene Extrakt (182,65 g) wurde mit 200 g Wasser versetzt, und bei einem pH-Wert von 4,5 und 55°C mit der Amylase "Dextrozyme GA" (400µL) 48 h inkubiert. Anschließend wurde die Mischung abgenutscht und am Rotationsverdapfer zur Gewichtskonstanz getrocknet. Die so gewonnene apfelwachsreiche Fraktion (16 g) wurde erfolgreich als Bestandteil eines Trennmittel für Fruchtgummis getestet, das bedeutet, die so gewonnene apfelwachsreiche Fraktion kann als Trennmittel genauso gut angewendet werden wie ein Trennmittel, welches ein Wachs (auch Apfelwachs) enthält, das durch andere bisher bekannte Verfahren gewonnen wurde.

### Beispiel 5 zur Extraktion von aromahaltiger Ölfraktion aus Hopfendolden

50 g trockene Hopfendolden der Sorte "Herkules" wurden mit 750 g einer 18 Gew.-%igen wässrigen Lösung von beta-Cyclodextrin versetzt und 2 Tage bei Raumtemperatur geknetet. Die nassen Hopfendolden wurden anschließend abfiltriert und das Cyclodextrin-Öl-Komplex-reiche Filtrat als Suspension gesammelt.

Die Suspension wurde als Schritt c) des erfindungsgemäßen Verfahrens zentrifugiert und die klare Phase abdekantiert.

Der so gewonnene Extrakt (28,99 g) wurde mit 15 g Wasser versetzt, und bei einem pH-Wert von 4,5 und 55°C mit der Amylase "Dextrozyme GA" (88 µL) für 48 h inkubiert. Das so gewonnene aromareiche Extrakt weist eine hohe Aromabeladung erlaubt den Einsatz des so gewonnenen Extrakts in einer Dosage von 1:1000 zur Aromatisierung von beispielsweise alkoholfreiem Bier.

### Beispiel 6 zur Extraktion von Aromastoffen aus ethanolhaltigem Enzianwurzelextrakt

Ein Extrakt aus Enzianwurzeln mit einem Alkoholgehalt von 60 Vol.-% wurde mit 6 Gew.-% gamma-Cyclodextrin in fester Form versetzt. Das Gemisch wurde über Nacht bei 6 °C gelagert. Auf diese Weise wurden ein hinreichend stabile Wirt-Gast-Komplexe erhalten.

Der Wirt-Gast-Komplex wurde als Schritt c) des erfindungsgemäßen Verfahrens mittels Filtration abgetrennt. Der Filterkuchen wurde mit Wasser versetzt. Die Freisetzung der Aromastoffe erfolgte durch eine enzymatische Behandlung des Wirt-Gast- Komplexes. Hierzu wurde die wässrige Mischung mit 1 µL / mL der Amylase "Dextrozyme GA" (Novozymes) versetzt und für 48 h bei 55 °C in einem geschlossenem Gefäß inkubiert. Das resultierende Gemisch wurde abschließend filtriert.

Das erhaltene aromareiche Produkt kann nun in niedriger Dosage zur Aromatisierung von **z.B.** in Produkten mit einem Alkoholgehalt von 0,0 Vol.-% Ethanol verwendet werden.

Es ist dem Fachmann ersichtlich, dass die Merkmale der einzeln dargestellten Beispiele auch miteinander kombiniert oder gegeneinander ausgetauscht werden können. Der Schutzbereich der Erfindung wird durch die beigefügten Ansprüche definiert.

### Bezugszeichenliste

- 1: organische Substanz mit mindestens einem apolaren Rest, kurz: "apolare organische Substanz (AOS), Aromastoff, Bitterstoff, Öl, Fett, Wachs, Klebstoff, Farbstoff
- 10: Ausgangsmischung
- 2: Cyclodextrin
- 12: Gast-Wirt-Komplex aus Cyclodextrin und organischer Substanz mit mindestens einem apolaren Rest (AOS), Cyclodextrin-AOS-Komplex
- 20: Saccharide
- 3: Wasser
- 4: Ethanolhaltige Lösung
- 40: Ethanol
- 5: Enzym
- 6: Komposition

## Patentansprüche

1. Verfahren zur Aromatisierung und/oder Stabilisieren eines Produktes, das ein Lebensmittel-, Genussmittel-, Kosmetik- oder Pharmaprodukt darstellt, in dem eine Komposition (6) zu dem zu aromatisierenden und/oder zu stabilisierenden Produkt zugesetzt wird,
wobei die Komposition (6) hergestellt wird mit einem Verfahren zur selektiven Abtrennung zumindest einer organischen Substanz mit mindestens einem apolaren Rest (AOS) (1) und/oder zumindest eines oder mehrerer Aromastoffe umfassend:
(a) Bereitstellen einer Ausgangsmischung (10), die mindestens eine organische Substanz mit mindestens einem apolaren Rest (AOS) und/oder zumindest einen oder mehrere Aromastoffe (1) und optional zumindest ein Lösungsmittel (3; 4; 40) enthält,
(b) In Kontakt bringen der Ausgangsmischung (10) mit mindestens einem Cyclodextrin (2),
wobei die organische Substanz (1) mit mindestens einem apolaren Rest aus der Gruppe ausgewählt ist, welche volatile Aromastoffe, nicht-volatile Aromastoffe wie zum Beispiel Bitterstoffe, Öl-, Fett- und/oder Wachsfraktionen, Farbstoffe und Klebstoffe, insbesondere aus pflanzlichen und/oder tierischen Ausgangsmaterialien, sowie Mischungen aus zumindest zwei der genannten Substanzen umfasst,
und wobei in Schritt a) und/oder in Schritt b) und/oder nach Schritt b) zumindest ein Lösungsmittel, insbesondere Wasser, zugegeben wird,
und wobei der Kontakt des mindestens einen Cyclodextrins (2) mit der zumindest einen organischen Substanz mit mindestens einem apolaren Rest und/oder zumindest einem oder mehreren Aromastoffen (1) der Ausgangsmischung (10) zum Erhalt zumindest eines Cyclodextrin-AOS-Komplexes und/oder Cyclodextrin-Aromastoff-Komplex (12) in einer flüssigen, insbesondere wässrigen, Phase (3; 4) führt,
umfassend die weiteren Schritte
(c) Abtrennung des Cyclodextrin-AOS-Komplexes und/oder des Cyclodextrin-Aromastoff-Komplexes (12) von der flüssigen Phase und
(d) Enzymatische Behandlung
des abgetrennten Cyclodextrin-AOS-Komplexes und/oder des Cyclodextrin-Aromastoff-Komplexes (12), wobei eine mit mindestens einer organischen Substanz mit mindestens einem apolaren Rest (AOS) (1) und/oder mit mindestens einem Aromastoff beladene Komposition (6) erhalten wird,
wobei die enzymatische Behandlung mit mindestens einem Enzym erfolgt, welches aus der Gruppe ausgewählt ist, die Enzyme mit Amylaseaktivität, bevorzugt alpha-Amylase, besonders bevorzugt mit Fungal-alpha-Amylase, Pulluanase und/oder Isoamylase,
sowie Mischungen aus zumindest zwei der genannten Enzyme umfasst.

2. Verfahren nach Anspruch 1,
**dadurch gekennzeichnet, dass**
in Schritt a) und/oder in Schritt b) und/oder nach Schritt b)
ein Wasseranteil im Bereich von 15 Vol.-% bis 35 Vol.-%, bevorzugt von 20 Vol.-% bis 30 Vol.-%,
und/ oder ein Ethanolanteil von mindestens 40 Vol.-%, bevorzugt ein Ethanolanteil im Bereich von 40 Vol.-% bis 60 Vol.-%,
eingestellt wird.

3. Verfahren nach Anspruch 1 oder 2,
umfassend einen weiteren Schritt
d1) Verdünnen des in Schritt c) abgetrennten Cyclodextrin-AOS-Komplexes und/oder des Cyclodextrin-Aromastoff-Komplexes (12) mit Wasser vor der enzymatischen, Behandlung in Schritt d).

4. Verfahren nach einem der Ansprüche 1 bis 3,
**dadurch gekennzeichnet, dass**
Schritt d) derart durchgeführt wird, dass die Cyclodextrin-Konzentration in der mit mindestens einer apolaren organischen Substanz (AOS) und/oder mit mindestens einem Aromastoff (1) beladenen Komposition (6) kleiner ist als 0,5 Gew.-%, bevorzugt kleiner als 0,1 Gew.-%.

5. Verfahren nach einem der Ansprüche 1 bis 4,
umfassend einen weiteren Schritt
(e) Filtrieren des aus der enzymatischen Behandlung des Cyclodextrin-AOS-Komplexes und/oder des Cyclodextrin-Aromastoff-Komplexes (12) resultierten Gemisches, wobei eine mit mindestens einer organischen Substanz mit mindestens einem apolaren Rest (AOS) und/oder mit mindestens einem Aromastoff beladene Komposition (6) erhalten wird.

6. Verfahren nach einem Ansprüche 1 bis 5,
wobei in Schritt a) und/oder in Schritt b) und/oder nach Schritt b) mindestens ein Lösungsmittel verwendet wird, welches aus der Gruppe ausgewählt ist, die Wasser, C₁-C₄-Alkohole, Diethylether, Aceton oder deren Mischungen, bevorzugt Wasser, Ethanol und deren Mischungen, umfasst.

7. Verfahren nach einem der Ansprüche 1 bis 6,
wobei als Cyclodextrin (2) zumindest ein substituiertes oder unsubstituiertes α- Cyclodextrin, zumindest ein substituiertes oder unsubstituiertes β-Cyclodextrin, zumindest ein substituiertes oder unsubstituiertes γ-Cyclodextrin, zumindest ein substituiertes oder unsubstituiertes δ-Cyclodextrin oder deren Mischungen verwendet wird, bevorzugt substituiertes oder unsubstituiertes γ-Cyclodextrin, besonders bevorzugt eine Mischung von 10 Gew.-% substituiertes oder unsubstituiertes β- Cyclodextrin und 90 Gew.-% substituiertes oder unsubstituiertes γ-Cyclodextrin.

8. Verfahren nach einem der Ansprüche 1 bis 7,
wobei die Abtrennung des Cyclodextrin-AOS-Komplexes (12) im Schritt (c) durch Zentrifugation oder Filtration, bevorzugt durch Vakuum- oder Nano-Filtration, stattfindet.

9. Verfahren nach einem der Ansprüche 1 bis 9,
mit einem weiteren Schritt
c1) Ruhen lassen vor der Abtrennung des Cyclodextrin-AOS-Komplexes und/oder des Cyclodextrin-Aromastoff-Komplexes von der flüssigen Phase
wobei die Ruhephase gemäß Schritt c1) insbesondere über eine Dauer von bis zu 24 Stunden, bevorzugt über eine Dauer von bis zu 12 Stunden, besonders bevorzugt über eine Dauer von 2 Stunden durchgeführt wird.

10. Verfahren nach einem der Ansprüche 1 bis 9,
wobei die durch die Abtrennung des Cyclodextrin-AOS-Komplexes und/oder des Cyclodextrin-Aromastoff-Komplexes (12) im Schritt (c) erhaltene, abgetrennte flüssige Phase zur Maximierung der Ausbeute erneut mit zumindest einem Cyclodextrin (2) versetzt und insbesondere in Schritt a) rückgeführt wird.

11. Verfahren nach einem der Ansprüche 1 bis 10,
wobei der im Schritt (c) abgetrennte Cyclodextrin-AOS-Komplex und/oder Cyclodextrin-Aromastoff-Komplex (12) vor der enzymatischen Behandlung im Schritt (d) in einem Schritt d1) mit Wasser (3) bis zu einer gewünschten Endkonzentration an einer oder mehreren hydrophilen organischen Substanz und/oder an einem oder mehreren Aromastoffen (1) verdünnt wird.

12. Verfahren nach einem der Ansprüche 1 bis 11
wobei das zumindest eine Enzym (5) in einer Menge im Bereich von 5 FAU bis 1000 FAU pro Gramm der abgetrennten festen Phase verwendet wird.

13. Verfahren nach einem der Ansprüche 1 bis 12
mit Einbringen des mindestens einen Aromastoffs und/oder der mindestens einen organischen Substanz (1) mit mindestens einem apolaren Rest
in ein Lebensmittel oder ein Genussmittel oder ein Getränk oder ein Kosmetikprodukt oder ein Pharmaprodukt mit einem Ethanolgehalt von 0,0 Vol.-%.

## Claims

1. A method for flavoring and/or stabilizing a product which constitutes a food product, luxury food product, cosmetic product, or pharmaceutical product, comprising adding, to the product to be flavored and/or stabilized, a composition (6);
wherein the composition (6) is produced by a method for selectively separating at least one organic substance comprising at least one apolar group (AOS) (1) and/or at least one or more aromatic substances comprising:
(a) providing a starting mixture (10) which contains at least one organic substance comprising at least one apolar group (AOS) and/or at least one or more aromatic substances (1) and optionally at least one solvent (3; 4; 40);
(b) bringing the starting mixture (10) into contact with at least one cyclodextrin (2);
wherein the at least one organic substance (1) comprising at least one apolar group is selected from the group comprising volatile aromatic substances, non-volatile aromatic substances such as, e.g., bitter substances, oil, fat and/or wax fractions, colorants and adhesives, in particular from plant-based and/or animal-based starting materials, and mixtures of at least two of the substances mentioned,
and wherein at least one solvent, in particular water, is added in step (a) and/or in step (b) and/or following step (b);
and wherein, as a result of the contacting of the at least one cyclodextrin (2) with the at least one organic substance comprising at least one apolar group and/or the at least one or more aromatic substances (1) of the starting mixture (10), at least one cyclodextrin-AOS complex and/or cyclodextrin-aromatic substance complex (12) is obtained in a liquid, in particular aqueous, phase (3; 4);
comprising the further steps of
(c) separating the cyclodextrin-AOS complex and/or the cyclodextrin-aromatic substance complex (12) from the liquid phase; and
(d) enzymatically treating the separated cyclodextrin-AOS complex and/or the cyclodextrin-aromatic substance complex (12) to obtain a composition (6) that is loaded with at least one organic substance comprising at least one apolar group (AOS) (1) and/or with at least one aromatic substance;
wherein the enzymatic treatment is performed using at least one enzyme selected from the group comprising enzymes with amylase activity, preferably alpha-amylase, most preferably with fungal alpha-amylase, pulluanase and/or isoamylase, and mixtures of at least two of these enzymes.

2. The method of claim 1,
**characterized in that**
in step (a) and/or in step (b) and/or following step (b),
a water content in the range from 15 vol% to 35 vol%, preferably from 20 vol% to 30 vol%, is adjusted;
and/or an ethanol content is adjusted so as to be at least 40 vol%, preferably to an ethanol content in the range from 40 vol% to 60 vol%.

3. The method of claim 1 or 2,
comprising a further step of
(d1) diluting the cyclodextrin-AOS complex separated in step c) and/or the cyclodextrin-aromatic substance complex (12) with water prior to the enzymatic treatment in step d).

4. The method as claimed in any of claims 1 to 3,
**characterized in that**
step (d) is performed such that the cyclodextrin concentration in the composition (6) that is loaded with at least one apolar organic substance (AOS) and/or with at least one aromatic substance (1) is less than 0.5 wt%, preferably less than 0.1 wt%.

5. The method as claimed in any of claims 1 to 4,
comprising a further step of
(e) filtering the mixture resulting from the in particular enzymatic treatment of the cyclodextrin-AOS complex and/or the cyclodextrin-aromatic substance complex (12), wherein a composition (6) loaded with at least one organic substance comprising at least one apolar group (AOS) and/or with at least one aromatic substance is obtained.

6. The method as claimed in any of claims 1 to 5,
wherein in step (a) and/or in step (b) and/or following step (b) at least one solvent is used, which solvent is selected from the group comprising water, C₁ - C₄ alcohols, diethyl ether, acetone, or mixtures thereof, preferably water, ethanol and mixtures thereof.

7. The method as claimed in any of claims 1 to 6,
wherein as a cyclodextrin (2), at least one substituted or unsubstituted α-cyclodextrin, at least one substituted or unsubstituted β-cyclodextrin, at least one substituted or unsubstituted γ-cyclodextrin, at least one substituted or unsubstituted δ-cyclodextrin, or mixtures thereof, preferably substituted or unsubstituted γ-cyclodextrin, most preferably a mixture consisting of 10 wt% of substituted or unsubstituted β-cyclodextrin and 90 wt% of substituted or unsubstituted γ-cyclodextrin is used.

8. The method as claimed in any of claims 1 to 7,
wherein the separating of the cyclodextrin-AOS complex (12) in step (c) is carried out by centrifugation or filtration, preferably by vacuum filtration or nanofiltration.

9. The method as claimed in any of claims 1 to 8,
comprising a further step of
(c1) allowing to rest, prior to the separating of the cyclodextrin-AOS complex and/or the cyclodextrin-aromatic substance complex from the liquid phase;
wherein the resting phase according to step (c1) is performed in particular over a duration of up to 24 hours, preferably over a duration of up to 12 hours, most preferably over a duration of 2 hours.

10. The method as claimed in any of claims 1 to 9,
wherein the separated liquid phase as obtained in step (c) by separating the cyclodextrin-AOS complex and/or the cyclodextrin-aromatic substance complex (12) is admixed again with at least one cyclodextrin (2), and in particular is recirculated to step (a), to maximize yield.

11. The method as claimed in any of claims 1 to 10,
wherein the cyclodextrin-AOS complex and/or the cyclodextrin-aromatic substance complex (12) separated in step (c) is prior to the in particular enzymatic treatment in step (d), diluted in a step (d1) with water, so as to obtain a desired final concentration of one or more hydrophilic organic substances and/or one or more aromatic substances (1).

12. The method as claimed in any of claims 1 to 11,
wherein the at least one enzyme (5) is used in an amount ranging from 5 FAU to 1000 FAU per gram of the separated solid phase.

13. The method as claimed in any of claims 1 to 12,
comprising introducing at least one aromatic substance and/or at least one organic substance (1) comprising at least one apolar group
into a food or a luxury food or a beverage or a cosmetic product or a pharmaceutical product with an ethanol content of 0.0 vol%.

## Revendications

1. Procédé d'aromatisation et/ou de stabilisation d'un produit, ledit produit étant un aliment, un produit d'agrément, un produit cosmétique ou un produit pharmaceutique, dans lequel une composition (6) est ajoutée au produit à aromatiser et/ou à stabiliser, ladite composition (6) étant obtenue selon un procédé de séparation sélective d'au moins une substance organique comprenant au moins un groupe apolaire (AOS) (1) et/ou d'au moins un ou plusieurs substances aromatiques, le procédé comprenant:
(a) la mise à disposition d'un mélange de départ (10) comprenant au moins une substance organique comprenant au moins un groupe apolaire (AOS) et/ou au moins une ou plusieurs substances aromatiques (1), et facultativement au moins un solvant (3; 4; 40),
(b) la mise en contact dudit mélange de départ (10) avec au moins une cyclodextrine (2),
la substance organique (1) comprenant au moins un groupe apolaire étant choisie dans le groupe constitué par des substances aromatiques volatiles, des substances aromatiques non volatiles, telles que notamment des substances amères, des fractions d'huiles, de graisses et/ou de cires, des colorants et des adhésifs, en particulier issus de matières premières végétales et/ou animales, ainsi que des mélanges d'au moins deux desdites substances,
et dans lequel au moins un solvant, en particulier de l'eau, est ajouté à l'étape (a) et/ou à l'étape (b) et/ou après l'étape (b),
et dans lequel la mise en contact de ladite au moins une cyclodextrine (2) avec ladite au moins une substance organique comprenant au moins un groupe apolaire et/ou au moins une substance aromatique (1) du mélange de départ (10) conduit à l'obtention d'au moins un complexe cyclodextrine-AOS et/ou d'un complexe cyclodextrine-substance aromatique (12) dans une phase liquide, notamment aqueuse (3; 4),
le procédé comprenant en outre les étapes suivantes:
(c) la séparation du complexe cyclodextrine-AOS et/ou du complexe cyclodextrine-substance aromatique (12) de la phase liquide, et
(d) le traitement enzymatique du complexe cyclodextrine-AOS et/ou du complexe cyclodextrine-substance aromatique (12) séparé, obtenant ainsi une composition (6) chargée d'au moins une substance organique comprenant au moins un groupe apolaire (AOS) (1) et/ou chargée d'au moins une substance aromatique,
ledit traitement enzymatique étant effectué avec au moins une enzyme choisie dans le groupe constitué par des enzymes présentant une activité amylase, de préférence alpha-amylase, particulièrement de préférence alpha-amylase fongique, pullulanase et/ou isoamylase, ainsi que des mélanges d'au moins deux desdites enzymes.

2. Procédé selon la revendication 1, **caractérisé en ce que**
dans l'étape (a) et/ou dans l'étape (b) et/ou après l'étape (b)
une teneur en eau est ajustée dans la plage de 15 % en volume à 35 % en volume, de préférence de 20 % en volume à 30 % en volume,
et/ou une teneur en éthanol d'au moins 40 % en volume est ajustée, de préférence une teneur en éthanol dans la plage de 40 % en volume à 60 % en volume.

3. Procédé selon la revendication 1 ou 2,
comprenant une étape supplémentaire
(d1) de la dilution du complexe cyclodextrine-AOS et/ou du complexe cyclodextrine-substance aromatique (12) séparé dans l'étape (c) avec de l'eau avant le traitement enzymatique dans l'étape (d).

4. Procédé selon l'une quelconque des revendications 1 à 3, **caractérisé en ce que**
l'étape (d) est effectuée de telle manière que la concentration en cyclodextrine dans la composition (6) chargée d'au moins une substance organique comprenant au moins un groupe apolaire (AOS) et/ou chargée d'au moins une substance aromatique (1) est inférieure à 0,5 % en poids, de préférence inférieure à 0,1 % en poids.

5. Procédé selon l'une quelconque des revendications 1 à 4,
comprenant une étape supplémentaire
(e) de la filtration du mélange résultant du traitement enzymatique du complexe cyclodextrine-AOS et/ou du complexe cyclodextrine-substance aromatique (12), obtenant ainsi une composition (6) chargée d'au moins une substance organique comprenant au moins un groupe apolaire (AOS) et/ou chargée d'au moins une substance aromatique.

6. Procédé selon l'une quelconque des revendications 1 à 5,
dans lequel au moins un solvant est utilisé dans l'étape (a) et/ou dans l'étape (b) et/ou après l'étape (b), le solvant étant choisi dans le groupe constitué par l'eau, des alcools en C₁-C₄, l'éther diéthylique, l'acétone ou des mélanges de ceux-ci, de préférence l'eau, l'éthanol et des mélanges de ceux-ci.

7. Procédé selon l'une quelconque des revendications 1 à 6,
dans lequel en tant que cyclodextrine (2) au moins une α-cyclodextrine substituée ou non substituée est utilisée, ou au moins une β-cyclodextrine substituée ou non substituée, ou au moins une γ-cyclodextrine substituée ou non substituée, ou au moins une δ-cyclodextrine substituée ou non substituée, ou des mélanges de celles-ci, de préférence une γ-cyclodextrine substituée ou non substituée, particulièrement de préférence un mélange de 10 % en poids de β-cyclodextrine substituée ou non substituée et 90 % en poids de γ-cyclodextrine substituée ou non substituée.

8. Procédé selon l'une quelconque des revendications 1 à 7,
dans lequel la séparation du complexe cyclodextrine-AOS et/ou du complexe cyclodextrine-substance aromatique (12) dans l'étape (c) s'effectue par centrifugation ou filtration, de préférence par filtration sous vide ou nano-filtration.

9. Procédé selon l'une quelconque des revendications 1 à 8,
comprenant une étape supplémentaire
(c1) de repos avant la séparation du complexe cyclodextrine-AOS et/ou du complexe cyclodextrine-substance aromatique de la phase liquide,
la phase de repos selon l'étape (c1) étant effectuée en particulier sur une durée allant jusqu'à 24 heures, de préférence sur une durée allant jusqu'à 12 heures, particulièrement de préférence sur une durée de 2 heures.

10. Procédé selon l'une quelconque des revendications 1 à 9,
dans lequel la phase liquide séparée obtenue par la séparation du complexe cyclodextrine-AOS et/ou du complexe cyclodextrine-substance aromatique (12) dans l'étape (c) est à nouveau additionnée d'au moins une cyclodextrine (2) afin de maximiser le rendement, et en particulier renvoyée à l'étape (a).

11. Procédé selon l'une quelconque des revendications 1 à 10,
dans lequel le complexe cyclodextrine-AOS et/ou le complexe cyclodextrine-substance aromatique (12) séparé dans l'étape (c) est, avant le traitement enzymatique dans l'étape (d), dilué dans une étape (d1) avec de l'eau (3) jusqu'à une concentration finale souhaitée en une ou plusieurs substances organiques hydrophiles et/ou en une ou plusieurs substances aromatiques (1).

12. Procédé selon l'une quelconque des revendications 1 à 11,
dans lequel ladite au moins une enzyme (5) est utilisée en une quantité dans la plage de 5 FAU à 1000 FAU par gramme de la phase solide séparée.

13. Procédé selon l'une quelconque des revendications 1 à 12,
comprenant l'introduction de ladite au moins une substance aromatique et/ou de ladite au moins une substance organique (1) comprenant au moins un groupe apolaire dans un aliment ou un produit d'agrément ou une boisson ou un produit cosmétique ou un produit pharmaceutique avec une teneur en éthanol de 0,0 % en volume.
